# EUROPEAN PATENT SPECIFICATION

(11) **EP 2 161 945 B1**
(45) Date of publication and mention of the grant of the patent: **30.09.2015**
(21) Application number: 07855670.1
(22) Date of filing: 12.12.2007
(51) Int. Cl.: H04W 24/02, H04W 84/04, H04W 36/22, H04W 76/06

(54) **A METHOD FOR TERMINATING CONNECTION TO WIRELESS RELAY STATION**
VERFAHREN ZUM BEENDEN EINER VERBINDUNG ZU EINER DRAHTLOSEN RELAISSTATION
PROCÉDÉ DE CLÔTURE DE CONNEXION AVEC UNE STATION RELAIS SANS FIL

(30) Priority: 13.04.2007 CN 200710101412
(43) Date of publication of application: 10.03.2010
(73) Proprietor: ZTE Corporation, Guangdong Province 518057 (CN)
(72) Inventor: CAI, Sean, San Diego, California 92130 (US); XU, Ling, Shenzhen City, Guangdong Province 518057 (CN)
(74) Representative: Zerbi, Guido Maria
(86) International application number: PCT/CN2007/003564
(87) International publication number: WO 2008/124985

(56) References cited:
- CN-A- 1 442 961
- CN-A- 1 545 255
- CN-A- 1 902 868
- CN-A- 1 905 728
- US-A1- 2006 252 367
- US-A1- 2007 030 809
- HANG ZHANG ET AL: "Relay Station Handover Procedure ; C80216j-07_219r2", IEEE DRAFT; C80216J-07_219R2, IEEE-SA, PISCATAWAY, NJ USA, vol. 802.16j, no. r2, 11 March 2007 (2007-03-11), pages 1-6, XP017785837, [retrieved on 2007-03-11]
- KAIBIN ZHANG ET AL: "Handover of Mobile Relay Station ; C80216j-07_147r3", IEEE DRAFT; C80216J-07_147R3, IEEE-SA, PISCATAWAY, NJ USA, vol. 802.16j, no. r3, 14 March 2007 (2007-03-14), pages 1-5, XP017785930, [retrieved on 2007-03-14]
- YOUSUF SAIFULLAH ET AL: "Relay Handover ; S80216j-06_190", IEEE DRAFT; S80216J-06_190, IEEE-SA, PISCATAWAY, NJ USA, vol. 802.16j, 7 November 2006 (2006-11-07) , pages 1-11, XP017784508, [retrieved on 2006-11-07]
- ZHANG JINGMEI ET AL: "Call routing and admission control for two-hop TDMA cellular system", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 1, 28 September 2005 (2005-09-28), pages 407-411, XP010878501, DOI: 10.1109/VETECF.2005.1557942 ISBN: 978-0-7803-9152-9

## Description

### Technical Field

The present invention relates to a wireless communication network, and more specifically, to a method for terminating a connection relationship to a wireless relay station in a wireless communication network comprising a base station and wireless relay stations.

### Background of the Invention

Nowadays, there are a variety of wireless communication systems, of which the commonalities are: the complication of stations' construction, the cable support needed by the base stations, and the relatively fixed coverage of the base stations. Due to the complexity of the wireless communication environment, such as buildings' obstruction in the dissemination path or obstacles between the receiving antenna and transmitting antenna of a base station and a user, a user may be in the blind area of a base station service. As such, although the user is in the area covered by the base station, he can not communicate with the base station normally, thus the user's communication quality is severely deteriorated; or even the user can not access to the system. For a user at the edge of a cell, the signal decays severely since the signal has traveled a relatively long path, thus the communication quality and service quality between the user and the base station is impacted, for example, in order to guarantee a user at the edge of a cell can receive the signal from the base station normally, a low order encoding and modulation method has to be applied, therefore the user's data rate is decreased; and if a high order encoding and modulation method is applied to guarantee the user's data rate, the transmission power of both the base station and the user need to be increased, which will interfere other users in the cell and users in the adjacent cells. In addition, with the development of the application, these wireless access systems can not well meet the wireless access requirement of random burst and covering some areas unreachable by cable.

Therefore, in order to expand the coverage of the base station service and improve the service quality of users at the edge of a cell, multiple types of relay systems have been developed so far, that is, the communication between a base station and a user is implemented through a relay station.

The relay system that emerged earlier is an analog relay system. After a relay station receives a signal, the signal received is analogically amplified without digital processing and then sent to a user, a base station, or the next relay station. This relay method is simple, but its disadvantage is obvious: besides the effective signal, the in-band interference signal received by the relay station is also amplified and sent in the transmission path. Therefore, the reliability of the useful signal is decreased after passing the relay station.

With the development of technology, the digital relay system is becoming mature. The system can demodulate and decode the received signal to acquire the source signal, and after saving and processing the signal, the system encodes and modulates the signal again, and sends the signal to a user, a base station, or the next relay station. This relay method prevents the transmission of the noise in the analog signal, and improves the reliability of the communication.

Generally, a wireless communication system provides a point-to-multipoint network topology structure for high-speed wireless data communication. In order to solve the problem in the communication quality of the users at the edge of a cell or in the blind area of a base station service, the concept of wireless relay station is introduced into the wireless network. However, the fixity, nomadic property and mobility of the wireless relay station are new challenges for the management of the whole wireless network, which requiring dynamic construction and adjustment of the wireless network.

But the introduction of this kind of wireless relay stations greatly complicates the management of the wireless network. The construction, maintenance and optimization of the conventional relay stations are manually implemented, and the workload is very heavy for a practical application. Whereas a digital relay station can perform base band processing by itself, has a certain capability of control and resource scheduling, and is able to select a base station or wireless relay station to access to. These properties provide a basis for the self-configuration and self-optimization of the wireless relay station.

In a cable IP network, a routing table can be used to help a routing gateway to select the optimal path for route optimization, and the routing gateway needs to dynamically maintain the routing table. But this method is not suitable to apply in a wireless communication network, mainly for the following reasons:
Each node in a wireless communication network may cause the update of the wireless links due to the changing of the wireless environment status. This is different from the fixed connection in a cable network.

The reliability of a wireless link in a wireless communication network is different from that of a cable network.

Each wireless link in a wireless communication network needs to occupy wireless resources, and the wireless link occupies the wireless resources once it is established.

Based on the above problems, a new solution is needed to solve how a wireless relay station performs self-configuration and self-optimization in a wireless network.

In addition, for this type of wireless communication network, there is no reasonable solution provided in the prior art to solve problems such as how a wireless relay station to join a wireless communication network group, how to update a connection relationship, and how to terminate a connection relationship.

In the document HANG ZHANG ET AL: "Relay Station Handover Procedure; C80216j-07_219r2", IEEE DRAFTP; C80216J-07_219R2, IEEE-SA, PISCATAWAY, NJ USA, vol.802. 16j. no. r2, 11 March 2007 (2007-03-11), page 1-6, XP0177785837, it provides RS handover procedure which is required when an RS migrates from the air-interface provided by one access station to the air-interface provided by another access station due to radio environment change or topology change, etc.

US 2006/252367 A1 provides mobile assisted relay selection in a telecommunications system. The mobile station communicates directly with the base station via a first channel. To facilitate selection of a suitable relay station, the mobile station broadcasts a burst for receipt by a plurality of relay stations. Relay stations each measure a quality of the received burst and communicate this information to the base station, which uses the information to select a most suitable one of the relay stations for use in carrying on indirect communications between the base station and the mobile station.

In the document KAIBIN ZHANG ET AL: "Handover of Mobile Relay Station ; C80216j-07_147r3", IEEE DRAFT; C80216J-07_147R3, IEEE-SA, PISCATAWAY, NJ USA, vol. 802.16j, no. r3, 14 March 2007 (2007-03-14), pages 1-5, XP017785930, it provides a handover solution for the mobile RS with its attached MS.

In the document YOUSUF SAIFULLAH ET AL: "Relay Handover; S80216j-06_190", IEEE DRAFT; S80216J-06_190, IEEE-SA, PISCATAWAY, NJ USA, vol. 802.161, 7 November 2006 (2006-11-07), pages 1-11, XP017784508, it provides Relay Handover procedure for the relay network.

US 2007/030809 A1 provides a system and method for multiple access and backhaul of a base station. More specifically, there is provided a method comprising detecting a decrease in throughput over a current backhaul, determining whether there is an alternate backhaul available, and accessing the alternate backhaul.

In the document ZHANG JINGMEI ET AL: "Call routing and admission control for two-hop TDMA cellular system", VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 1, 28 September 2005 (2005-09-28), pages 407-411, XP010878501, it provides proposes a novel call routing and admission control (CRAC) algorithm for the two-hop cellular system with the aim of extending system coverage and increasing system capacity cost-effectively.

### Summary of the Invention

The problem to be solved by the present invention is to provide a method for terminating a connection relationship to a wireless relay station.

The features of the method according to the present invention are defined in the independent claim, and the preferable features according to the present invention are defined in the dependent claims.

In order to solve the above technical problem, the present invention provides a method for terminating a connection to a wireless relay station, applied in a system comprising a wireless communication network group, and each wireless communication network group comprising a base station and wireless relay stations subordinated to the base station, and the method comprising the following steps of:
(a) a wireless relay station RS1 ("RS1" here is just a symbol utilized for the ease of description, and does not refer to any specific wireless relay station) already connecting to a wireless communication network group, and the base station of the group or a wireless relay station working as an agent node in a communication sub-network to which RS1 belongs determining that the connection relationship to RS1 needs to be terminated;
(b) said base station or the wireless relay station working as the agent node sending a connection termination message to RS1 and releasing resource of RS1;
(c) after receiving a connection termination instruction, RS 1 releasing the resource to terminate the connection to the wireless communication network wherein terminating the connection relationship to RS1 comprises with drawing from the communication network group after termination.

Moreover, the above method may further comprise:
in step (a), said base station or the wireless relay station working as the agent node determining that the connection to RS1 needs to be terminated according to current situation and a corresponding strategy; or
RS1 determining that the connection to the wireless communication network needs to be terminated according to the situation of RS1 and a corresponding strategy, and sending a connection termination request to the base station or the wireless relay station working as the agent node, and after receiving the request, the base station or the wireless relay station working as the agent node determining that the connection to RS1 can be terminated, and then proceeding to the next step, otherwise rejecting the request.

Moreover, the above method may further comprise the following steps between step (a) and step (b):
(a1) the base station or the wireless relay station working as the agent node judging whether RS1 has data to transmit, and if yes, proceeding to the next step, otherwise proceeding to step (b);
(a2) the base station or the wireless relay station working as the agent node selecting target nodes to which handovers should be performed for all or part of wireless relay stations and terminals connecting to RS1 and having data to transmit, according to stored information and a preset corresponding strategy;
(a3) the base station or the wireless relay station working as the agent node establishing data tunnels to these target nodes for the terminals and wireless relay stations connecting to RS1 and having data to transmit, and sending corresponding downlink data in the data tunnels, and then instructing these terminals and wireless relay stations to update connections to the target nodes.

Moreover, the above method may further comprise:
after selecting the target nodes in step (a2), the base station or the wireless relay station working as the agent node further sending handover requests to these target nodes; and in step (a3), after obtaining responses that the target nodes allow the handovers, establishing said data tunnels to the target nodes.

Moreover, the above method may further have the following feature:
in step (a3), when the data tunnels are established for the terminals and wireless relay stations connecting to RS1 and having data to transmit, data tunnels are established merely for those first hop wireless relay stations and terminals directly connecting with RS1, and other wireless relay stations and terminals connecting to the first hop wireless relay stations transfer with the first hop wireless relay stations.

Moreover, the above method may further have the following feature:
in step (a3), if a said target node belongs to another wireless communication network group, said data tunnel to the target node is established according to one of the following modes:
the first mode is: if the target node is another base station, a data node at the network side→ the base station of RS1 before a handover → the target base station; if the target node is a wireless relay station connecting to another base station, a data node at the network side → the base station of RS1 before a handover → the base station of the target wireless relay station → the target wireless relay station;
the second mode is: if the target node is another base station, a data node at the network side → the target base station; if the target node is a wireless relay station connecting to another base station, a data node at the network side → the base station of the target wireless relay station → the target wireless relay station;
the third mode is: a data node at the network side → the base station to which RS1 accesses before a handover → the wireless relay station to which RS 1 accesses before a handover → the target wireless relay station or a target base station.

Moreover, the above method may further have the following feature:
in step (a3), if a said target node belongs to the same wireless communication network group, said data tunnel to the target node is established according to one of the following modes:
   the first mode is: a data node at the network side → the base station of RS1 the target wireless relay station.
   the second mode is: a data node at the network side → the wireless relay station to which RS 1 accesses before a handover → the target wireless relay station.

Moreover, the above method may further have the following feature:
in step (a), the stored information, according to which the base station or the wireless relay station working as the agent node select the target nodes, comprises one or more pieces of the following information: network topology relationship information of the group, wireless link status information of the group, network topology relationship information of adjacent wireless communication network groups, wireless link status information of adjacent wireless communication network groups, and information of adjacent cells detected by RS 1.

Moreover, the above method may further comprise:
in step (b), before the connection termination message is sent to RS1, if RS1 has data to transmit, the base station of RS1 before a handover or the wireless relay station acting as the agent node in the communication sub-network of RS 1 or the network side sending attributes of all or part of the wireless relay stations and terminals connecting to RS1 and having data to transmit to base stations of target nodes or wireless relay stations working as agent nodes in respective communication sub-networks of target nodes, to be used by these wireless relay stations and terminals during access, said part of the wireless relay stations and terminals being first hop wireless relay stations connecting to RS 1 and terminals directly connecting with RS 1.

Moreover, the above method may further comprise:
the wireless relay stations or terminals synchronizing with possible adjacent base stations or adjacent wireless relay stations in advance and saving this synchronization information; in step (a3), after receiving the instruction of updating the connections, said wireless relay stations and terminals connecting to RS 1 finding the synchronization information of the target nodes in the instruction from the stored synchronization information of adjacent base stations and adjacent wireless relay stations, to synchronize with the target nodes and establish wireless network connections.

Moreover, the above method may further have the following feature:
the connection termination instruction sent in step (b) comprises a time for terminating the connection, and both the base station and RS 1 release the resource when the time expires.

Moreover, the above method may further have the following feature: said management node is the base station.

Moreover, the above method may further comprise:
when an abnormality occurs in a link between wireless relay stations, the connection relationship being terminated with one of the following methods:
   A, a wireless relay station which keeps a link with the base station sending a connection termination request to the base station, and the request indicating the wireless relay station at the other end, connection to which needs to be terminated, and a reason for requesting the termination; after receiving the request, the base station updating wireless network topology information of the group, and if the base station is not a management node, the base station reporting to the management node, and the management node updating the wireless network topology information of the group;
   B, a wireless relay station which keeps a link with the base station sending a connection termination request to the wireless relay station working as the agent node in the communication sub-network of the wireless relay station, and the request indicating the wireless relay station at the other end, connection to which needs to be terminated, and a reason for requesting the termination; after receiving the request, the wireless relay station working as the agent node updating wireless network topology information of the communication sub-network, and reporting to a management node, and after receiving the report, the management node updating wireless network topology information of the group;
   C, if a wireless relay station which keeps a link with the base station is an agent node, the wireless relay station updating wireless network topology information of the communication sub-network, and reporting to a management node; after receiving the report, the management node updating wireless network topology information of the group;

Moreover, the above method may further comprise:
when an abnormality occurs in a link between a base station and a wireless relay station, the base station regarding the connection between the wireless relay station and the wireless communication network as terminated, and directly updating wireless network topology information of the group, while the wireless relay station notifying all the wireless relay stations and terminals connecting thereto that handovers to other base stations or wireless relay stations should be performed.

Moreover, the above method may further comprise:
a wireless relay station, connection to which is terminated for an abnormality in a link, according to a pre-determined strategy, restarting a process of joining a wireless connection network group, or shutting down transmit power and waiting for system maintenance.

Moreover, the above method may further comprise:
a management node in said wireless communication network group storing topology relationship information of the group, and after said management node sends the connection termination message in step (b), the management node updating the wireless network topology information of the group; or
a management node in said wireless communication network group storing topology relationship information of the group, and an agent node storing wireless network topology information of the communication sub-network, after the agent node sends the connection termination message in step (b), the agent node updating the wireless network topology information of the communication sub-network and reporting to the management node, and after receiving the report, the management node updating the wireless network topology information of the group.

With the method of the present invention, in a wireless communication system, the advantages of the wireless relay stations can be fully utilized to increase the coverage and throughput, moreover, through the construction and update of the topology relationship, the topology relationship and resource configuration of the wireless relay stations and the base station can be intelligently adjusted, thus the service quality and resource utilization rate of the wireless communication network can be effectively improved.

### Brief Description of the Drawings

FIG. 1 is the networking diagram of a wireless relay communication system in accordance with the present invention;
FIG. 2 ~ FIG. 5 are four illustrations of the adaptive management method for a wireless communication network in accordance with the present invention.
FIG. 6 ~ FIG. 10 are five illustrations of the method for a RS to join a wireless communication network group in accordance with the present invention.
FIG. 11 ~ FIG. 12 are two illustrations of the method for terminating a connection relationship to a RS in accordance with the present invention.

### Preferred Embodiments of the Present Invention

The present invention will be described in detail with combination of the accompanying drawings and embodiments.

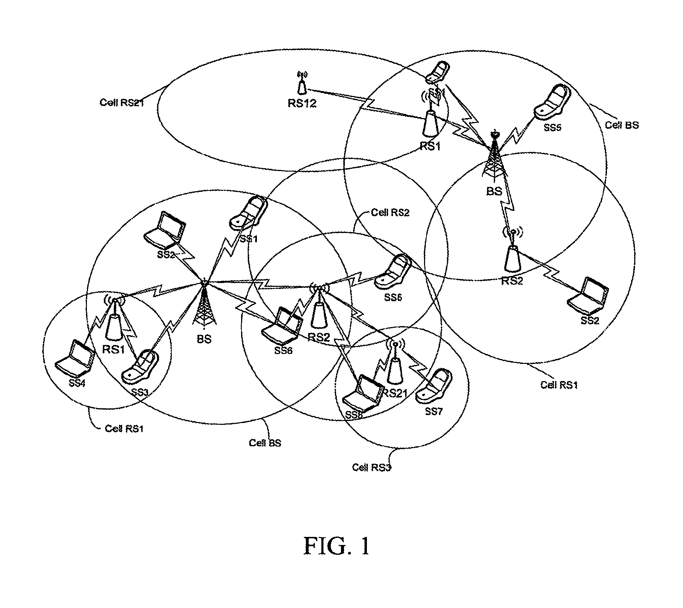

FIG. 1 shows the wireless communication system in which an intelligent construction of wireless relay of the present invention is applied, and the system comprises the following parts:
1) At least one base station, sending synchronization signals and control information for the access and control of terminals and relay stations; the base station may directly communicate with the terminals; the base station may also communicate with the terminals through the relay stations.
2) At least one first-hop relay station (RS), directly accessing to a base station, and the base station and the wireless relay station sending synchronization signals and control information for the access and control of terminals and other relay stations.
3) At least one terminal, communicating with a base station through relay stations;
4) A multi-hop relay station, which might be comprised in the system;
5) A terminal directly communicating with a base station, which might be comprised in the system.

As shown in FIG. 1, each base station may have one or more wireless relay stations, and each wireless relay station may further have wireless relay stations according to its demand, which is the mode of BS→RS→RS, for example, RS21 in FIG. 1 is a second hop wireless relay station. Some RS, such as RS1, is to expand the network coverage, and some RS, such as RS2, is to increase the throughput. Terminals can receive signals from multiple base stations and wireless relay stations simultaneously.

Thereby, the present invention refers to the group composed of a BS and the RSs subordinated to the BS (the RSs which directly or indirectly access to the BS) as a wireless communication network group. One base station has only one wireless communication network group and different base stations belong to different wireless communication network groups.

Embodiments of the adaptive management method for a wireless communication network in accordance with the present invention will be described below.

### The first scheme

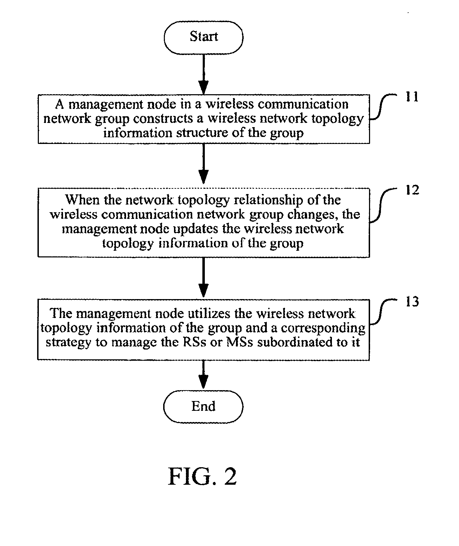

As shown in FIG. 2, this scheme comprises the following steps:
Step 11, a management node in a wireless communication network group constructs a wireless network topology information structure of the group;

The wireless network topology information structure in this scheme comprises information of the nodes at two ends of wireless links in the wireless communication network group, and the nodes at the ends can be represented by the base station ID (BSID) and relay station ID (RSID).

Above-mentioned information can be illustrated with a basic relationship matrix in which the connection relationship between any two nodes in the wireless communication network group is described, including the information whether there is a connection or not, and the information of the number of hops if there is a connection.

Taking FIG. 1 for example, the relationship matrix of the wireless communication network group to which the base station at the left side belongs is as follows:

| | BS | RS1 | RS2 | RS21 |
|---|---|---|---|---|
| BS | 0 | 1 | 1 | 2 |
| RS1 | 1 | 0 | 0 | 0 |
| RS2 | 1 | 0 | 0 | 1 |
| RS21 | 2 | 0 | 1 | 0 |

Similarly, the relationship matrix of the wireless communication network group to which the base station at the right side of Fig. 1 belongs is as follows:

| | BS | RS1 | RS11 | RS2 |
|---|---|---|---|---|
| BS | 0 | 1 | 2 | 1 |
| RS1 | 1 | 0 | 1 | 0 |
| RS11 | 2 | 1 | 0 | 0 |
| RS2 | 1 | 0 | 0 | 0 |

Here, the first row and the first column are the numberings of all the nodes in the wireless communication network group. And "0" indicates that there is no wireless link between these two nodes. While "1" indicates that there is a direct wireless link between these two nodes, and taking the "1" in the second row and third column for example, the "1" indicates that there is a direct wireless connection between RS1 and BS. "2" indicates that these two nodes are connected by two wireless links. Taking the "2" in the second row and the fifth column for example, the "2" indicates that RS21 and BS are connected by two wireless links, that is, RS21 connects with BS through a wireless relay station.

Therefore, a "1" in the relationship matrix corresponds to a wireless link, and the corresponding node in the first row and that in the first column are just the nodes at the two ends of the wireless link. Moreover, from the relationship matrix, the information of the number of hops between two nodes can be directly obtained.

There are several options for the configuration of the node with management function:
The first option is central control, in which the base station is generally the unique management node for constructing the wireless network topology information structure of the group and taking charge of the update and communication of the information. But the possibility that some RS is designated as the management node in special cases is not ruled out.
The second option is distributed control, in which the base station is the management node for constructing the wireless network topology information structure of the group and taking charge of the update and communication of the information. In addition, a wireless relay station can be an agent node to manage the wireless communication sub-network subordinated to the wireless relay station, and the nodes in the wireless communication sub-network comprise the agent node and one or more RSs accessing to the BS through the agent node, for example, RS2 at the left side can be an agent node to manage RS21.

The agent node constructs the wireless network topology information structure of the sub-network, takes charge of the update and communication of the information within the sub-network, and also needs to send the wireless network topology information of the sub-network to the base station, and then the base station updates the whole wireless communication network group.

In this case, the wireless network topology information structure of the sub-network constructed by agent node RS is similar to above-mentioned structure constructed by the base station, that is, it includes the information of nodes at two ends of wireless links in the wireless communication sub-network, and may further include the information of the number of hops between the two nodes. This structure can be described through the same way of above-mentioned basic relationship matrix.

For example, RS1 is a node having relay station RS 11 subordinated to it, thus it can manage such a relationship matrix by itself:

| | RS1 | RS11 |
|---|---|---|
| RS1 | 0 | 1 |
| RS11 | 1 | 0 |

The explanation of the information in this basic relationship matrix has been illustrated above, and will not be repeated.

Step 12, the management node updates the wireless network topology information of the group when the network topology relationship of the wireless communication network group changes;

A new RS joining in, handover of an existing RS, connection termination of an existing RS (the handover and termination of a RS can be actively initiated by the management node or by RS), and so on, all may cause a change in the network topology relationship of the wireless communication network group. These processes generally need the participation of the management node, thus the management node can acquire the change information of the network topology relationship according to corresponding signaling. If these changes occur in a wireless communication sub-network administrated by an agent node, the agent node should report the updated topology relationship of the wireless communication sub-network to the management node, thereby the management node can update the original wireless network topology information of the wireless communication network group.

Step 13, the management node utilizes the wireless network topology information of the group and a corresponding strategy to manage the RSs or MSs subordinated to it.

One example is: when a RS or terminal requests a handover from one RS to another RS within the group, the base station judges the number of hops of the target RS to which the handover is requested based on the network topology relationship, and if the number of hops exceeds to a specified threshold, such as 2, the request may be denied or another target node may be selected for the RS or terminal, which can avoid the long delay after the access. However, the present invention is not limited to this specific case of management, and in practice, there may be a lot of applications in management such as configuration, scheduling and handover.

### The second scheme

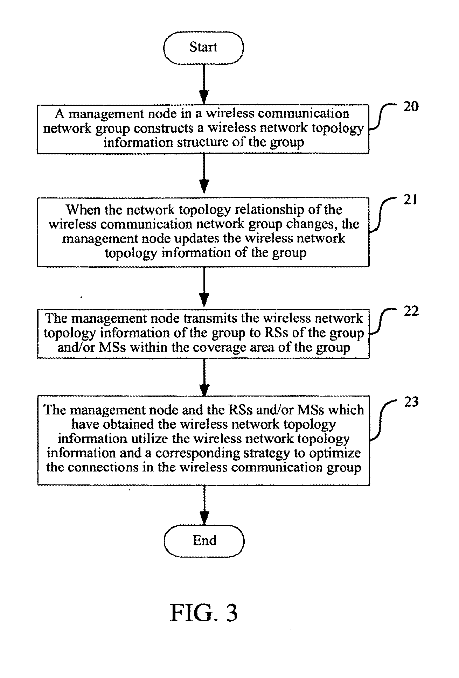

As shown in FIG. 3, the adaptive management method for a wireless communication network in this scheme comprises the following steps:
Step 20, a management node in a wireless communication network group constructs a wireless network topology information structure of the group;
Step 21, the management node updates the wireless network topology information of the group when the network topology relationship of the wireless communication network group changes;

The above two steps are the same as those in the first scheme.

Step 22, the management node transmits the wireless network topology information of the group to RSs of the group and/or MSs in the coverage of the group;

In this scheme, the management node transmit the wireless network topology information of the group to all the RSs in the group, but in other cases, the information may just be transmitted to part of the RSs, such as the RSs of agent nodes, or first-hop RSs.

Transmission of the wireless topology relationship table can be implemented through the following methods: A. Add a configuration indication information unit in the existing downlink data indication message to indicate the position and size of the wireless network configuration information data such as the wireless network topology information and wireless link status information. B. Directly use a configuration indication message carrying configuration information such as the wireless network topology information and wireless link status information. The configuration information may be broadcasted to each node in the communication group. Each node in the communication group may also actively request to acquire the configuration information of the wireless network.

Since a RS of an agent node can also constructs the wireless network topology information structure of a wireless communication sub-network, for the present invention, a RS may have the topology information of the whole wireless communication network group, or the topology information of the wireless communication sub-network, or no topology information at all.

When transmitting information, the management node may broadcast the wireless network topology information of the group in a broadcasting channel to facilitate RSs and MSs acquiring more information about the wireless communication network. Nodes in the wireless communication network group may ask the management node for the wireless link topology information and the management nodes provides the corresponding wireless link topology information according to the application.

Step 23, the management node and the RSs and/or MSs that have acquired the wireless network topology information optimize the connections in the wireless communication network group, utilizing the wireless network topology information and a corresponding strategy.

One example is: a RS may control the access of a new RS based on the network topology information of the whole wireless communication network group or that of the communication sub-network subordinated to it, for example, when a RS at the second hop receives an access request from a new RS, it may reject the access.

Another example is, if a MS may acquire the network topology information from a broadcast message, it can determine the number of hops for the handover to a candidate RS based on the information, and if it is a third hop RS, the MS will not access to it even though its signal is the strongest, but select one from the RSs or BSs of the second hop or above whose signal is the strongest to perform the handover.

Similarly, the present invention is not limited to this specific case of management.

Obviously, the two management methods in the first scheme and the second scheme can be applied simultaneously, that is, the third and fourth steps in the second scheme can also be performed in the first scheme.

### The third scheme

In this scheme, on the basis of the construction and update of the wireless network topology information, the link status information of wireless links is further detected, recorded and updated, and based on the wireless link status, wider and more effective management is carried out.

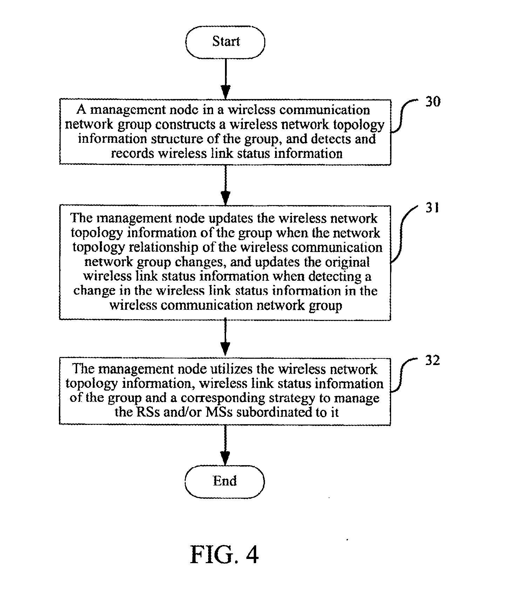

As shown in FIG. 4, the method of this scheme comprises the following steps:
Step 30, a management node in a wireless communication network group constructs a wireless network topology information structure of the group, and detects and records wireless link status information;

The wireless link status information may comprise channel interference/noise ratio (CINR), wireless link package loss/error rate, delay of the processing and communication in the wireless links, the actual throughput of each wireless link and the resources configured for the wireless links, and so on. One or any combination of these parameters may be adopted, and other parameters may also be adopted.

The wireless link status information can be obtained through the following two methods:
1) Obtain the information based on detection result of service signal, for a wireless link directly connecting to the management node (the base station generally), the management node can detect the relative parameters of the uplink link status, and requests the node at the other end to report the relative parameters of the downlink status (reporting method such as periodical reporting or event triggering reporting may be adopted); for the link status between other nodes, the node of the previous hop obtains the information with an identical method and reports it to the management node.
2) Obtain the information based on the detection result of test signal, the management node (generally the base station) designates one or more nodes in the topology to send one or a series of test signals, and meanwhile designates other nodes to cooperate for the test and return the test results to the node sending the signals or directly to the management node. The node sending the signals or the management node acquires the status information of the relative wireless links based on the detection result, and if the node sending the signals is not a management node, it should report the updated wireless link status information to the management node.

In this case, multiple detection methods may be utilized, for example, after the initial access of a new RS, the management node designates the RS to send test signals, and designates other RSs to cooperate for the detection and return the test results (such as strength of the RS test signals received, signal to noise ratio, and so on) to the base station, and the management node can acquire the status of the relative links through analysis, and judge whether the access node of the RS should be adjusted according to the topology relationship and the status of the wireless links.

An alternative is, when the network is comparatively idle, the management node chooses the base station and all the RSs accessed to by some other RSs to send above-mentioned test signals and designates the nodes at the other ends within the topology relationship to cooperate for the test and return the test results, and this can guarantee that status of each wireless link in the topology can be tested. The management node analyzes and updates the wireless link status information in the wireless communication network group based on the test results, and adjusts the connection relationship of the wireless communication network according to the current wireless network topology information and the new wireless link status information.

Step 31, the management node updates the wireless network topology information of the group when the network topology relationship of the wireless communication network group changes, and updates the original wireless link status information when detecting a change in the wireless link status information in the wireless communication network group;

The update of the network topology relationship may be independent of the update of the wireless link status information. The update of the wireless link status information can also be performed according to the two methods described above, that is, the update is performed after obtaining the wireless link status information based on detection result of the service signal or the update is performed after obtaining the wireless link status information based on detection result of the test signal.

Step 32, the management node manages the RSs and/or MSs subordinated to it, utilizing the wireless network topology information, wireless link status information of the group and a corresponding strategy.

In this scheme, with the obtained wireless link status information, the management node carries out a more rational and intelligent management, which will be described through the following examples:

After detection, if the base station finds that a first-hop RS is too busy, it may designate the second-hop RS subordinated to the first-hop RS to hand over to another first-hop RS, which is an adaptive load balancing operation.

When a RS initially accesses to a first-hop RS, generally, it selects a RS with the strongest signal, then if the base station finds that the link status between the first-hop RS and the base station is too bad, for example, too crowded, the base station may let the RS to hand over to another RS whose signal might not be the strongest, but the quality of the link on the whole path is better.

When a RS needs a handover, the base station or a RS as an agent node may perform a weighted computation based on the status of the multiple wireless links on the path, according to the wireless network topology information and wireless link status information, to select a target node with the best quality of service (QoS) for the RS.

### The fourth scheme

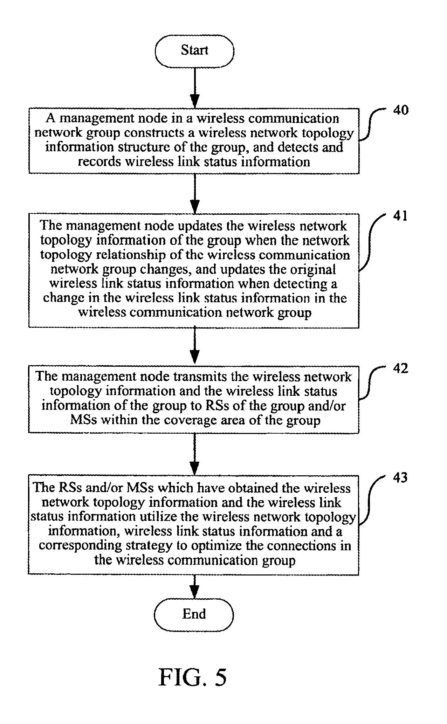

As shown in FIG. 5, the adaptive management method for a wireless communication network in this scheme comprises the following steps:
Step 40, a management node in a wireless communication network group constructs wireless network topology information structure of the group, detects and records wireless link status information;
Step 41, the management node updates the wireless network topology information of this group when the network topology relationship of the wireless communication network group changes, and updates the original wireless link status information when detecting a change in the wireless link status information in the wireless communication network group;

The above two steps are the same as those in the third scheme.

Step 42, the management node transmits the wireless network topology information and the wireless link status information of the group to the RSs of the group and/or the MSs in the coverage of the group;

The management node may transmit the wireless network topology information and the wireless link status information of the group to all the RSs of the group or just part of the RSs, such as first-hop RSs or RSs accessed to by some other RSs. The management node may also broadcast the wireless network topology information and wireless link status information of the group in a broadcasting channel, and the MSs may receive the information before the access. In addition, nodes in the wireless communication network group may ask the management node for the wireless link status information, and the management node provides the corresponding wireless link status information according to the application.

Step 43, the RSs and/or MSs which have obtained the wireless network topology information and the wireless link status information optimize the connections in the wireless communication group, utilizing the wireless network topology information, wireless link status information and a corresponding strategy.

Here, in the control of the access of a new RS or MS, a RS may also take the relative wireless link status into consideration, besides the number of hops, thus may perform the control more rationally, and the third scheme may be referred to. So is the case in the update of the wireless links, the number of hops and the wireless link status may both be considered for the selection of a target node.

Obviously, the two management methods in the third scheme and the fourth scheme can be applied simultaneously, that is, the third and fourth steps in the third scheme can also be performed in the fourth scheme.

In addition, in any one of the above schemes, management nodes of adjacent wireless communication network groups may exchange the wireless network topology information and wireless links information of the respective wireless communication network groups, and during a handover of a RS, when the RS detects a node in an adjacent cell, the base station can select a node which meets the requirement of QoS as the target node more accurately according to the topology information and the wireless link status information of the communication network group to which the node in the adjacent cell belongs.

The exchange between the management nodes may comprise the following situations:
1) A management node actively notifies an adjacent base station when there is an update in the topology relationship (wireless link status information may be included) of the wireless communication network group.
2) A management node actively requests the management node in an adjacent cell to provide the wireless network topology information (wireless link status information may also be included) of the adjacent cell.

A management node may further transmit the wireless network topology information and wireless link status information of adjacent cells to all or part of the RSs in the group, so when these RSs detect a signal from the adjacent cells during a handover, they can also select a node which meets the requirement of QoS as the target node more accurately.

Embodiments of a wireless relay station RS joining a communication network group in accordance with the present invention will be described below.

The process can be implemented through the following embodiments:

### The first embodiment

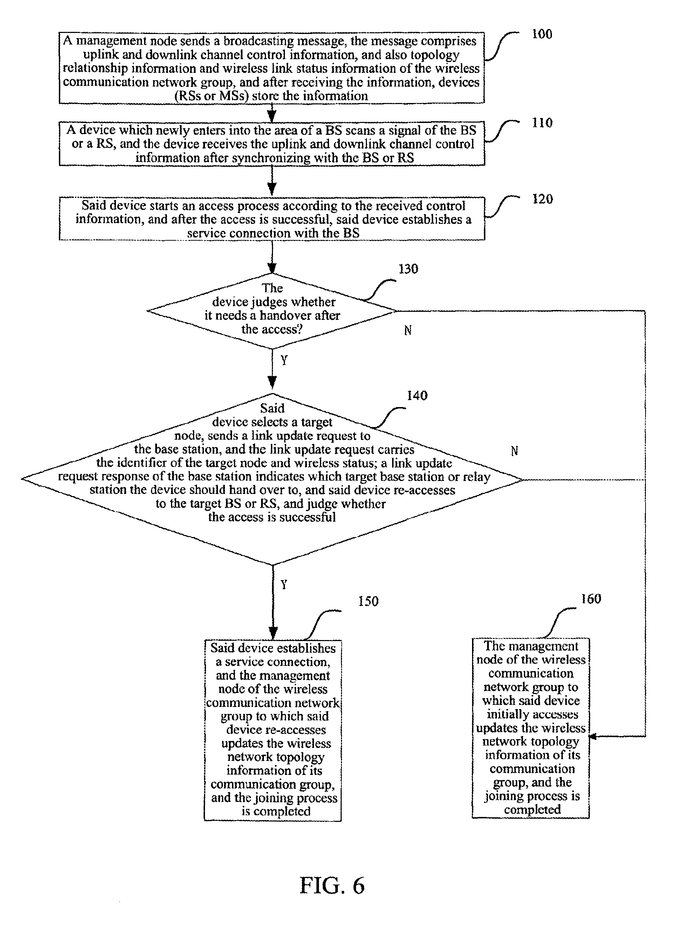

In this embodiment, after an access, a device performs a handover according to its acquired topology relationship information and wireless link status information, and the topology relationship of the wireless communication network group is updated after the handover, and the joining process is completed. As shown in FIG. 6,

Step 100, a management node sends a broadcasting message, the message comprises uplink and downlink channel control information, and also topology relationship information and wireless link status information of the wireless communication network group, and after receiving the information, devices (RSs or MSs) store the information.

In this broadcasted channel control information, the base station may separately describe the control information sent to a relay station and the control information sent to a terminal. And the topology relationship information and wireless link status information may be carried in an added new message field in an existing broadcasting message, such as DCD message in IEEE802.16 air interface protocol or may be carried in a new broadcasting message, such as a wireless topology broadcasting message.

Step 110, a device which newly enters into the area of a BS scans a signal of the BS or a RS, and the device receives the uplink and downlink channel control information after synchronizing with the BS or RS;

The area subordinated to the BS includes the coverage area extended by the RSs in the group.

Step 120, said device starts an access process according to the received control information, and after the access is successful, said device establishes a service connection with the BS;

The newly joined device may directly access to the BS or the access may be implemented through one or more intermediate RSs. So is the case in the following several schemes.

Step 130, after the access, the device may judge whether it needs a handover based on information of the wireless communication network group (including wireless network topology information, or wireless network topology information together with wireless link status information) and information of adjacent cells (topology relationship information and wireless link status information of the wireless communication network groups of the adjacent cells may be included, optional), if the handover is needed, proceeds to step 140, while if the handover is not needed, proceeds to step 160;

The strategy here may be, for example, selecting, from the nodes whose hop number is not larger than 2, the node whose wireless link's quality is the best as the target node; that the wireless link's quality is the best may be the weighted average result of the multiple wireless links on the path to the base station.

Step 140, said device selects a target node, sends a link update request to the base station, and the link update request carries the identifier of the target node and wireless status. After the base station receives the request, based on the wireless communication topology information, wireless link status information of the group, information of adjacent cells (wireless network topology information and/or wireless link status information of the wireless communication network groups of the adjacent cells may be included, optional) and a corresponding strategy, the base station feeds back a link update request response to indicate which target base station or relay station the device should handover to, and said device re-accesses to the target BS or RS, establishes a service connection after the access is successfully completed, and proceeds to step 150, while if the access fails , proceeds to step 160.

Here, the target BS or RS may be in the same wireless communication network group with the initial access or may be a BS or RS in another wireless communication network group.
Step 150, the management node of the wireless communication network group to which said device re-accesses updates the wireless network topology information of its communication group, and the joining process is completed;
Step 160, the management node of the wireless communication network group to which said device initially accesses updates the wireless network topology information of its communication group, and the joining process is completed;
The concrete process of step 150 and step 160 may further divide into the following cases:
   If said device accesses to a RS, and the RS is an agent node, the RS needs to update the wireless network topology information of the sub-network subordinated to it, and reports to the management node, and the management node updates the wireless network topology information of its wireless communication network group;
   If said device accesses to a RS, and the RS is not an agent node, the RS directly reports to the management node, and the management node updates the wireless network topology information of its wireless communication network group;
   If said device accesses to a BS, and the BS is a management node, the BS may directly update the wireless network topology information of its communication group;
   If said device accesses to a BS, and the BS is not a management node, the BS needs to report to the management node, and the management node updates the wireless network topology information of its wireless communication network group;
   The above cases may also exist in other embodiments.

After the management node of a wireless communication network group updates the wireless network topology information, it may transmit the information to other nodes. Afterwards, the management node of the wireless communication network group performs an update after obtaining newly added wireless link status information and may further transmit the information to other nodes.

### The second embodiment

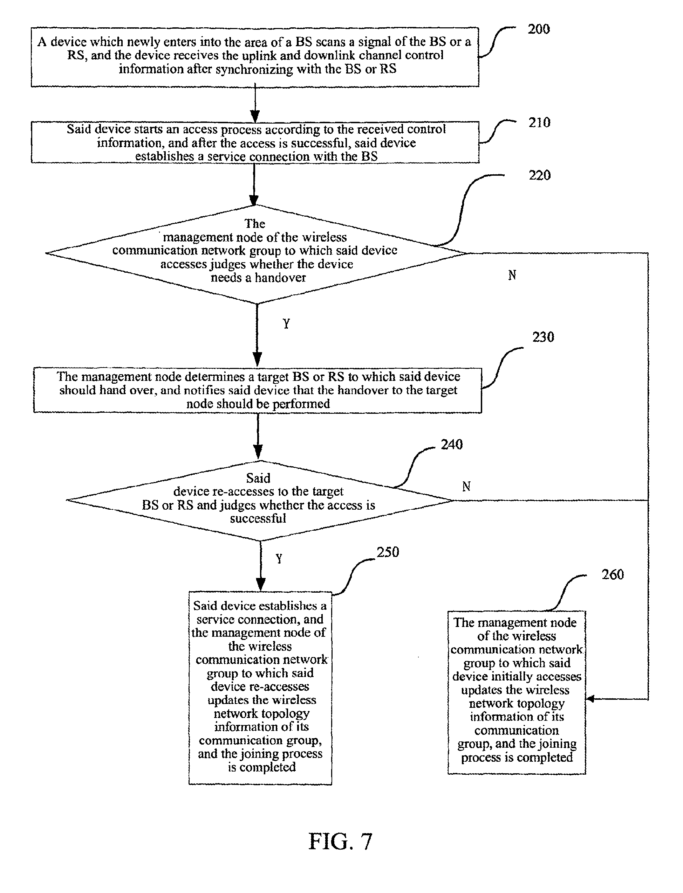

In this embodiment, after the access of a device, the management node of the wireless communication network group to which the device accesses judges whether the device needs a handover based on the network topology information and wireless link status information, if the handover is needed, the network topology information is updated after the handover, and the joining process is completed. As shown in FIG. 7,
Step 200, a device which newly enters into the area of a BS scans a signal of the BS or a RS, and receives uplink and downlink channel control information after synchronizing with the BS or RS;
Step 210, said device starts an access process according to the received control information, and after the access is successfully completed, said device establishes a service connection with the BS;
Step 220, the management node of the wireless communication network group to which the device accesses judges whether the device needs a handover based on a stored information of the wireless communication network group (including the wireless network topology information, or the wireless network topology information together with the wireless link status information), information of adjacent cells (optional) and a preset corresponding strategy, if the handover is needed, proceeds to step 230, otherwise proceeds to step 260;

If the base station is not the management node, it needs to notify the management node of the node to which the device accesses.

Step 230, the management node determines a target BS or RS that said device should hand over to, and notifies said device that the handover to the target node should be performed.

Step 240, said device re-accesses to the target BS or RS, and after the access is successfully completed, proceeds to step 250, while if the access fails, proceeds to step 260.

Step 250, said device establishes a service connection, and the management node of the wireless communication network group to which said device re-accesses updates the wireless network topology information of its communication group, and the joining process is completed.

Step 260, the management node of the wireless communication network group to which said device initially accesses updates the wireless network topology information of its communication group, and the joining process is completed.

After the management node of a wireless communication network group updates the wireless network topology information, it may transmit the information to other nodes. Afterwards, the management node of the wireless communication network group performs an update after obtaining newly added wireless link status information and may further transmit the information to other nodes.

### The third embodiment

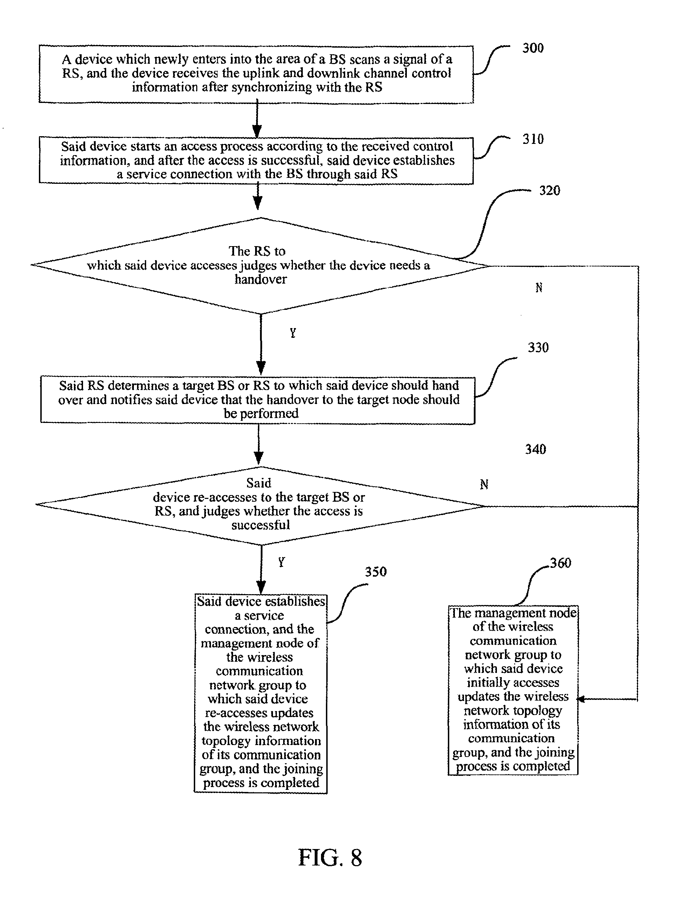

In this embodiment, after the access of a device, a RS of the wireless communication network group to which the device accesses judges whether the device needs a handover based on the network topology information and wireless link status information, if the handover is needed, the network topology information is updated after the handover, and the joining process is completed, as shown in FIG. 8.

The premise of this embodiment is: the management node transmits the topology relationship information and wireless link status information of the whole wireless communication network group to the RS to which the device accesses, that is, the RS keeps the information. Or the RS keeps the topology relationship information and wireless link status information of its communication sub-network.
Step 300, a device which newly enters into the area of a BS scans a signal of a RS, and receives uplink and downlink channel control information after synchronizing with the RS;
Step 310, said device starts an access process according to the received control information, and after the access is successfully completed, said device establishes a service connection with the BS through said RS;
Step 320, the RS to which said device accesses judges whether the device needs a handover based on the kept information (including the wireless network topology information, or the wireless network topology information together with the wireless link status information, or the wireless network topology information of the communication sub-network, or the wireless network topology information together with the wireless link status information of the communication sub-network), information of adjacent cells (optional) and a preset corresponding strategy, if the handover is needed, proceeds to step 330, otherwise proceeds to step 360;
The topology relationship information and wireless link status information in the above step may belong to the whole communication network group or to the sub-network of the RS.

Step 330, said RS determines a target BS or RS to which said device should hand over and notifies said device that the handover to the target node should be performed.

Step 340: said device re-accesses to the target BS or RS, and after the access is successfully completed, said device establishes a service connection, and proceeds to step 350, while if the access fails, proceeds to step 360.

Step 350: the management node of the wireless communication network group to which said device re-accesses updates the wireless network topology information of its communication group, and the joining process is completed.

Step 360: the management node of the wireless communication network group to which said device initially accesses updates the wireless network topology information of its communication group, and the joining process is completed.

After the management node of a wireless communication network group updates the wireless network topology information, it may transmit the information to other nodes. Afterwards, the management node of the wireless communication network group performs an update after obtaining newly added wireless link status information and may further transmit the information to other nodes.

Similarly, the management node might just keep the topology relationship information of the wireless communication network group; in this case, it is merely needed to delete the "wireless link status information" in the above process, and an identical process can be applied.

### The fourth embodiment

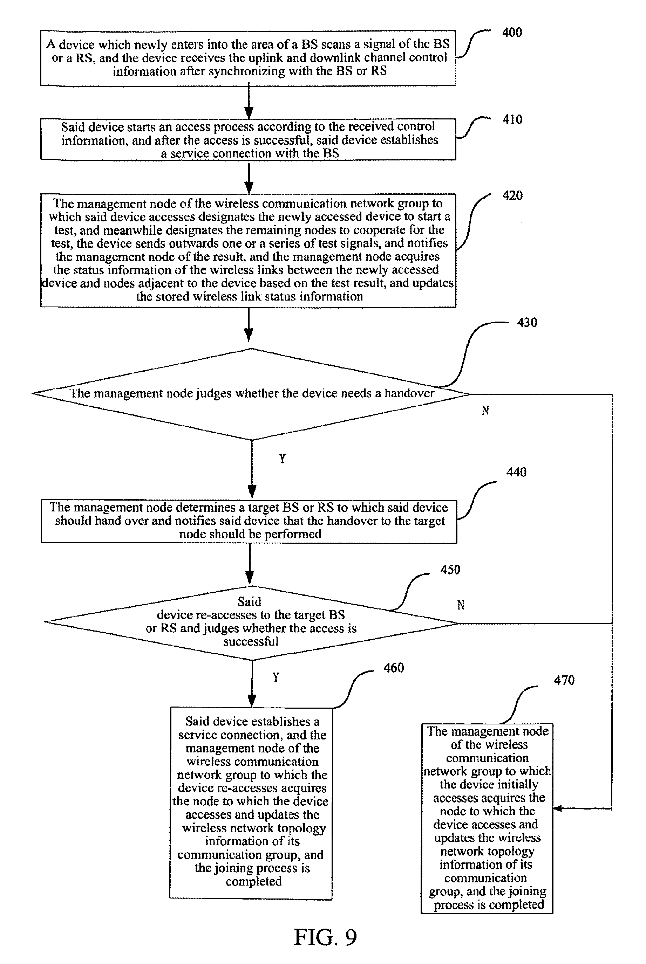

In this embodiment, after the access of a device, the management node of the wireless communication network group to which the device accesses judges whether the device needs a handover based on the network topology information and real-time detected wireless link status information, and if the handover is needed, the network topology information is updated after the handover, and the joining process is completed. As shown in FIG. 9,
Step 400, a device which newly enters into the area of a BS scans a signal of the BS or a RS, and receives uplink and downlink channel control information after synchronizing with the BS or RS;
Step 410, said device starts an access process according to the received control information, and after the access is successfully completed, said device establishes a service connection with the BS;
Step 420, the management node of the wireless communication network group to which said device accesses designates the newly accessed device to start a test, and meanwhile designates the remaining nodes to cooperate for the test, the device sends outwards one or a series of test signals, for instance, the test signal is received and the measurement situation is fed back, such as strength of the signal, signal to noise ratio and delay, the management node is notified of the result, and the management node acquires the status information of the wireless links between the newly accessed device and nodes adjacent to the device based on the test result, and updates the stored wireless link status information.
Step 430, the management node judges whether the device needs a handover based on information of the wireless communication network group (including stored topology relationship information, real-time detected wireless link status information), information of adjacent cells (optional) and a preset corresponding strategy, and if the handover is needed, proceeds to step 440, otherwise proceeds to step 470;
Step 440, the management node determines a target BS or RS to which said device should hand over, and notifies the device that the handover to the target node should be performed.
Step 450, said device re-accesses to the target BS or RS, and after the access is successfully completed, said device establishes a service connection, and proceeds to step 460, while if the access fails, proceeds to step 470.
Step 460, the management node of the wireless communication network group to which said device re-accesses acquires the node to which the device accesses and updates the wireless network topology information of its communication group, and the joining process is completed.
Step 470, the management node of the wireless communication network group to which said device initially accesses acquires the node to which the device accesses and updates the wireless network topology information of its communication group, and the joining process is completed.

After the management node of a wireless communication network group updates the wireless network topology information and the wireless link status information, it may transmit the information to other nodes. And before the communication, the status information of wireless links which are non-existent after a detection may be discarded.

Real-time detection is performed in this embodiment, thereby the latest wireless link status information can be acquired, which will facilitate a more accurate handover judgment.

### The fifth embodiment

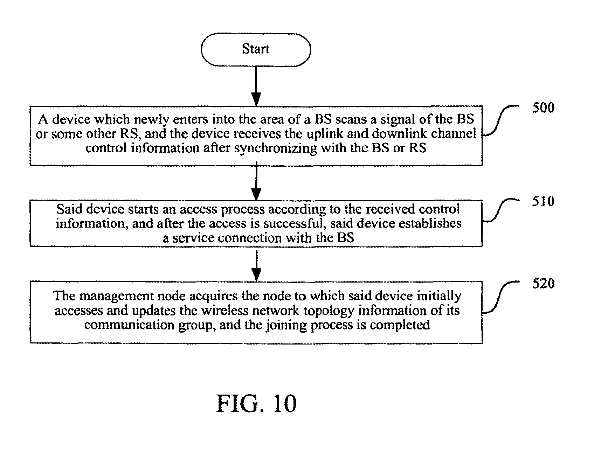

In this embodiment, there is no handover judgment after the access of a device, and the topology information of the wireless communication network group is directly updated, and the joining is completed. As shown in FIG. 10,
Step 500, a device which newly enters into the area of a BS scans a signal of the BS or some other RS, and receives uplink and downlink channel control information after synchronizing with the BS or RS;
Step 510, said device starts an access process according to the received control information, and after the access is successfully completed, said device establishes a service connection with the BS;
Step 520, the management node acquires the node to which the device initially accesses and updates the wireless network topology information of its communication group, and the joining process is completed.

After the management node of the wireless communication network group updates the wireless network topology information, it may transmit the information to other nodes. Afterwards, the management node of the wireless communication network group may further update and transmit the wireless link status information.

Embodiments of terminating a connection between a wireless relay station and a BS in accordance with the present invention will be described below.

The termination of a connection relationship mentioned here differs from the update of a connection relationship in the fact that a RS withdraws from the communication group after a termination rather than performs a handover. If the RS re-enters into a communication group, the process of joining the communication group is necessary. Similarly, when a connection terminates, if the RS has other RSs or terminals connecting to it, sometimes it should be considered how to let them continually receive the service and how to guarantee the continuity of service and integrity of data to the greatest extent.

Suppose a wireless relay station RS1 has established a connection with a BS. The termination of the connection between the wireless relay station and the base station can be initiated by the base station or by the wireless relay station.

### The first scheme

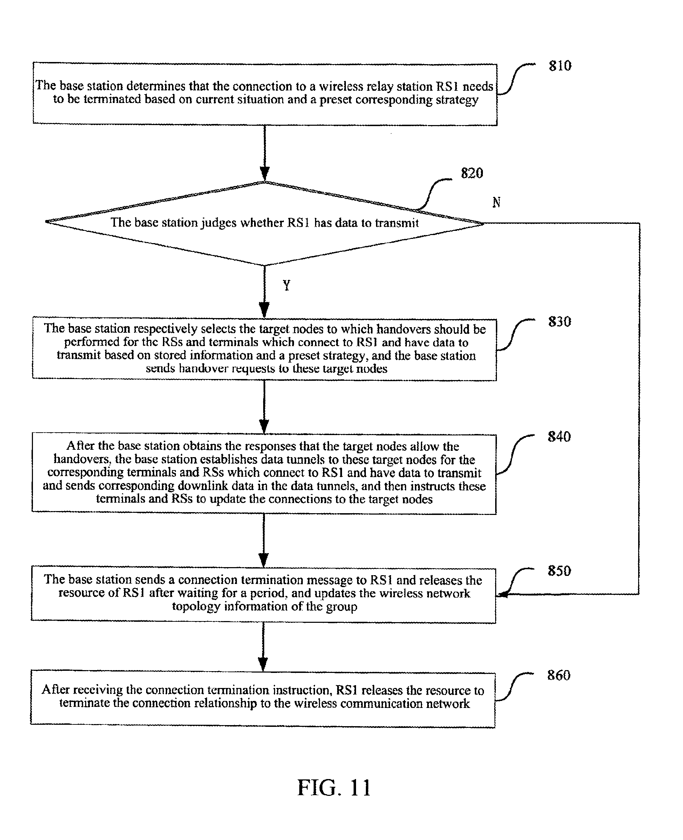

In this scheme, the termination of the connection to RS1 is initiated by the base station, as shown in FIG. 11, it comprises the following steps:
Step 810, the base station determines that the connection to a wireless relay station RS1 needs to be terminated based on current situation and a preset corresponding strategy;
   Termination of the connection to RS1 is due to the need of the system capacity, or security, or overhauling.
Step 820, the base station judges whether RS1 has data to transmit, if no, directly proceeds to step 850, otherwise proceeds to the next step;
Step 830, the base station selects target nodes to which handovers should be performed for the RSs and terminals which connect to RS1 and have data to transmit based on stored information and a preset strategy, and the base station sends handover requests to these target nodes;
   The stored information, based on which the target nodes are selected, may comprise one or more pieces of the following information: the network topology relationship information of the group, the wireless link status information of the group, the network topology relationship information of adjacent wireless communication network groups, the wireless link status information of adjacent wireless communication network groups, information of adjacent cells reported by the terminals or RSs connecting to RS1. Moreover, the above information may also be used in the judgment of terminating a connection relationship.
   In this embodiment, said RSs and terminals which connect to RS1 and have data to transmit are limited to the first hop RSs connecting to RS1 and the terminals directly connecting with RS1, and for other RSs and terminals connecting to the first hop RSs, they can transfer with the first hop RSs. Of course, the present invention may not have this limit.
Step 840, after the base station obtains the responses that the target nodes allow the handovers, the base station establishes data tunnels to these target nodes for the corresponding terminals and first hop RSs which connect to RS1 and have data to transmit and sends corresponding downlink data in the data tunnels, and meanwhile instructs these terminals and first hop RSs to update the connections to the target nodes;
   After receiving the instruction of updating the connections, said terminals and RSs connecting to RS1 start the connection update to establish wireless links to new nodes so that the service is sustained. For those terminals and RSs which connect to RS1 and have no data to transmit, the connections are directly terminated, and these terminals and RSs re-access to the wireless network.

If the base station does not receive a response that a target node allows the handover, the base station may give up establishing the data tunnel or select another target node and send a handover request again.

For the update of a link across multiple communication groups, the tunnel can be established according to the following modes:
The first mode is: if the target node is another base station, the data node at the network side → the base station of RS1 before the handover → the target base station; if the target node is a RS connecting to another base station, the data node at the network side → the base station of RS1 before the handover → the base station of the target RS → the target RS.

A wireless and wired mixture data tunnel is established here, the downlink data is sent to RS1 by the base station of RS1 before the handover through the original data tunnel, and meanwhile, a copy of the downlink data is sent to the base station of the target node that RS1 should hand over to. After the establishment of the tunnel, the target node sends data to RS 1, and RS 1 can receive the data after accessing to the target node.

The second mode is: if the target node is another base station, the data node at the network side → the target node; if the target node is a RS connecting to another base station, the data node at the network side → the base station of the target RS1 → the target RS.

In this mode, the downlink data of RS1 is directly sent to the base station of the target node from the data node at the network side, without the forwarding by the original base station.

The third mode is: the data node at the network side → the BS to which RS1 accesses before the handover → the RS to which RS1 accesses before the handover → the target RS or target BS.

In the case that RS 1 accesses to a RS, in this mode, the original data tunnel are utilized, and a link from the RS to which RS1 accesses to the target node is added, which is establishing a wireless data channel, and there is no need of passing the wired connection between the base stations.

For a link update within a communication group, the tunnel can be established according to the following modes:
The first mode is: the data node at the network side → the base station of RS1 → the target RS.

That is, the downlink data is sent to RS1 by the base station through the original data tunnel, and meanwhile, a copy of the data is sent to the target RS that RS1 should hand over to.

The second mode is: the data node at the network side → the RS to which RS1 accesses before the handover → the target RS.

In this mode, the original data tunnel is also utilized and a link from the source RS to the target RS is added, which is the new data tunnel.

In this mode, when RS1 hands off from the RS to which RS1 accesses to the BS in the group, the data tunnel from the data node at the network side to the BS in the communication group of RS1 has already existed, and there is no need of re-establishment.

Moreover, in order to speed up the re-accessing process, before the update of the connections, the base station of RS1, or the RS working as the agent node in the communication sub-network of RS1, or the network side may send the attributes of the RSs and terminals connecting to RS1 and having data to transmit (such as capability of the RSs and terminals, attributes of the current wireless links of the RSs or terminals) to the BS of the target node or the RS working as the agent node in the communication sub-network of the target node, so that when these terminals and RSs having data to transmit re-enter the network, the information interaction is simplified, and accessing time of them is reduced. Communication of the information may directly utilize the handover request messages or may utilize new messages, such as relay station/ terminal attribute message, and so on.

Similarly, the RSs or terminals may synchronize with the possible adjacent base stations/RSs in advance and save the synchronization information. Once these RSs and terminals connecting to RS1 receive the instruction of updating the connections, they may find the synchronization information of the target nodes according to the instruction information and the stored information of the target base stations/RSs, and establish wireless network connections to other adjacent base stations/RSs as soon as possible.

A Link update message can be utilized to instruct the terminals and RSs which connect to RS1 and have data to transmit to update the connections to the target nodes.

Step 850, the base station sends a connection termination message to RS1 and releases the resource of RS1 after waiting for a period, and updates the wireless network topology information of the group;

After the base station updates the wireless network topology information of the group, if the base station is not a management node, the base station should report to the management node, and the management node updates the local wireless network topology information. The management node may further transmit this information to other nodes in the group according to a corresponding strategy and update the corresponding wireless link status information.

Step 860, after receiving the connection termination instruction, RS1 releases the resource to terminate the connection relationship to the wireless communication network.

The connection termination instruction may comprise a time for terminating the connection, and both the base station and RS 1 release resource when the time expires to avoid the service of the terminals and RSs connecting to RS1 being interrupted.

The functions performed by the base station in the above process may be performed by the RS working as the agent node in the communication sub-network of RS 1, that is, it is merely needed to replace the BS in the above process with the agent node.

In the present invention, the corresponding processing for the terminals and RSs connecting to RS1 may not implemented, and after implementing step 810, directly proceeds to step 850.

### The second scheme

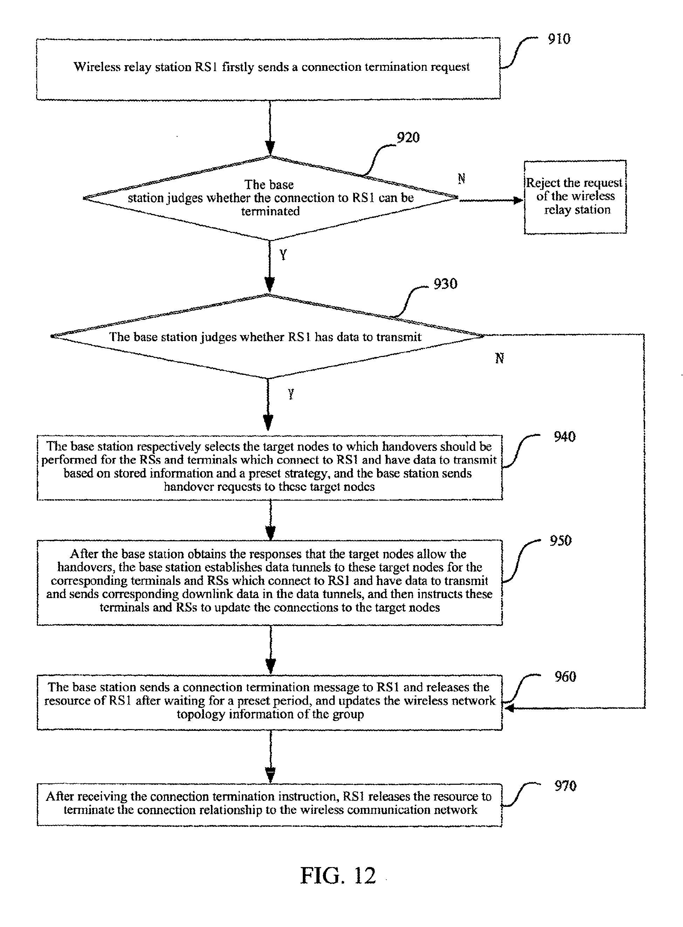

In this scheme, the wireless relay station initiates the termination, and as shown in FIG. 12, the scheme comprises the following steps:
Step 910, wireless relay station RS1 firstly sends a connection termination request;
Step 920, the base station judges whether the connection to RS1 can be terminated, if yes, proceeds to step 930, otherwise, denies the request of the wireless relay station;
Step 930, the base station judges whether RS1 has data to transmit, and if yes, proceeds to the next step, otherwise, proceeds to step 960;
Step 940, the base station selects the target nodes to which handovers should be performed for the RSs and terminals which connect to RS1 and have data to transmit according to stored information and a preset corresponding strategy, and sends handover requests to these target nodes;
Step 950, after the base station obtains the responses that the target nodes allow the handovers, the base station establishes data tunnels to these target nodes for the corresponding terminals and RSs which connect to RS1 and have data to transmit and sends the corresponding downlink data in the data tunnels, and then instructs these terminals and RSs to update the connections to the target nodes;
   Concrete implementation of this step may refer to the description related to step 830 , and the three methods related to the tunnel establishment, attribute communication and pre-saving the synchronization information of adjacent nodes can be applied singly or through any combination, so is the case in the previous scheme.
Step 960, the base station sends a connection termination message to RS1 and releases the resource of RS1 after waiting for a preset period, and updates the wireless network topology information of the group;
Step 970, after receiving the connection termination instruction, RS1 releases the resource to terminate the connection relationship to the wireless communication network.

Similarly, the connection termination instruction may comprise a time for terminating the connection, and both the base station and RS 1 release the resource after the time expires to avoid the service of the terminals and RSs connecting to RS1 being interrupted. The functions performed by the base station in the above process may also be performed by the RS working as the agent node in the communication sub-network of RS1.

Moreover, in some situations, such as a situation in which requirement for the service continuity is low or there is so such requirement, after step 920 is implemented, step 960 may directly be implemented to reduce the system complexity.

### The third scheme

In this scheme, termination of the connection is caused by abnormal situations, and mechanism for maintaining wireless connections between a BS and RSs and those between RSs and RSs is needed. If the BS or a RS detects that the wireless connection to the other end is abnormally terminated, it may also initiate the process of connection termination.

This scheme divides into the following cases:

### The first case

When an abnormality occurs in the link between RS1 and RS2, for instance, correct data packets cannot be received in one direction of the link between RS1 and RS2 for a period, the RS (such as RS1) which keeps a link with the base station sends a connection termination request to the base station, and the request indicates the RS at the other end (RS2) , connection to which needs to be terminated, and the reason for requesting the termination, such as correct data packets cannot be received;

After receiving the request, the base station updates the wireless network topology information of the group. And if the base station is not the management node, it further needs to report to the management node, and the management node updates the wireless network topology information of the group.

The RS at the other end (RS2), according to a pre-determined strategy, may restart to join the wireless connection network group, or shut down the transmit power and wait for the system maintenance.

### The second case

When an abnormality occurs in a link between a RS and a RS, for instance, correct data packets cannot be received in one direction of the link between RS1 and RS2 for a period, RS1 which keeps a link with the base station sends a connection termination request to the RS working as the agent node in the communication sub-network of RS1, and the request indicates the RS at the other end (RS2), connection to which needs to be terminated, and the reason for requesting the termination, which is the abnormality in the link;

After receiving the request, the RS working as the agent node updates the wireless network topology information of the communication sub-network and reports to the management node;

After receiving the report, the management node updates the wireless network topology information of the group.

The RS at the other end (RS2), according to a pre-determined strategy, may restart to join the wireless connection network group, or shut down the transmit power and wait for the system maintenance.

### The third case

When an abnormality occurs in a link between a RS and a RS, and if the RS which keeps a link with the base station is an agent node, the RS updates the wireless network topology information of the communication sub-network and reports the abnormal situation to the management node;

After receiving the report, the management node updates the wireless network topology information of the group.

The RS at the other end (RS2), according to a pre-determined strategy, may restart to join the wireless connection network group, or shut down the transmit power and wait for the system maintenance.

### The fourth case

When an abnormality occurs in a link between a BS and a RS, the BS regards the connection between the RS and the wireless communication network as terminated, and the BS directly updates the wireless network topology information of the group. And the RS should notify all the RSs and terminals connecting to it that the handover to other BSs or RSs should be performed. Meanwhile, The RS, according to a pre-determined strategy, may restart to join the wireless connection network group, or shut down the transmit power and wait for the system maintenance.

If the base station is not the management node, the base station should report to the management node, and the management node updates the wireless network topology information of the group.

There are plenty of methods for determining an abnormality in a link between a RS and a RS or that between a BS and a RS, and the method may be a timing detection, or a passive detection through statistics of the routine data interaction. As long as a wireless link in a direction of uplink or downlink is abnormal, termination steps should be taken.

## Claims

1. A method for terminating a connection to a wireless relay station, applied in a system comprising a wireless communication network group, and each wireless communication network group comprising a base station and wireless relay stations subordinated to the base station, **characterized by** that the method comprises the following steps of:
a) a wireless relay station RS1 already connecting to a wireless communication network group, and the base station of the group or a wireless relay station working as an agent node in a communication sub-network to which RS 1 belongs determining that the connection relationship to RS1 needs to be terminated (820, 920);
b) said base station or the wireless relay station working as the agent node sending a connection termination message to RS1 and releasing resource of RS1 (850, 960);
c) after receiving a connection termination instruction, RS1 releasing the resource to terminate the connection to the wireless communication network (860, 970);
wherein terminating the connection relationship to RS1 comprises RS1 withdrawing from the communication network group after the termination.

2. A method of claim 1, further comprising:
in step a), said base station or the wireless relay station working as the agent node determining that the connection to RS1 needs to be terminated according to current situation and a corresponding strategy; or
RS1 determining that the connection to the wireless communication network needs to be terminated according to the situation of RS1 and a corresponding strategy, and sending a connection termination request to the base station or the wireless relay station working as the agent node, and after receiving the request, the base station or the wireless relay station working as the agent node determining that the connection to RS 1 can be terminated, and then proceeding to the next step, otherwise rejecting the request.

3. A method of claim 1, further comprising the following steps between step a) and step b):
a1) the base station or the wireless relay station working as the agent node judging whether RS1 has data to transmit (820, 930), and if yes, proceeding to the next step, otherwise proceeding to step (b);
a2) the base station or the wireless relay station working as the agent node selecting target nodes to which handovers should be performed for all or part of wireless relay stations and terminals connecting to RS1 and having data to transmit, according to stored information and a preset corresponding strategy (830,940);
a3) the base station or the wireless relay station working as the agent node establishing data tunnels to these target nodes for the terminals and wireless relay stations connecting to RS1 and having data to transmit, and sending corresponding downlink data in the data tunnels, and then instructing these terminals and wireless relay stations to update connections to the target nodes (840, 950).

4. A method of claim 3, further comprising:
after selecting the target nodes in step a2), the base station or the wireless relay station working as the agent node further sending handover requests to these target nodes; and in step a3), after obtaining responses that the target nodes allow the handovers, establishing said data tunnels to the target nodes.

5. A method of claim 3, wherein,
in step a3), when the data tunnels are established for the terminals and wireless relay stations connecting to RS1 and having data to transmit, data tunnels are established merely for those first hop wireless relay stations and terminals directly connecting with RS1, and other wireless relay stations and terminals connecting to the first hop wireless relay stations transfer with the first hop wireless relay stations.

6. A method of claim 3, wherein,
in step a3), if a said target node belongs to another wireless communication network group, said data tunnel to the target node is established according to one of :
if the target node is another base station, from a data node at the network side to the base station of RS1 before a handover to the target base station; if the target node is a wireless relay station connecting to another base station, from a data node at the network side to the base station of RS1 before a handover to the base station of the target wireless relay station to the target wireless relay station; or
if the target node is another base station, from a data node at the network side to the target base station; if the target node is a wireless relay station connecting to another base station, from a data node at the network side to the base station of the target wireless relay station to the target wireless relay station; or
from a data node at the network side to the base station to which RS1 accesses before handover to the wireless relay station to which RS 1 accesses before handover to the target wireless relay station or target base station.

7. A method of claim 3, wherein,
in step a3), if a said target node belongs to the same wireless communication network group, said data tunnel to the target node is established according to one of :
from a data node at the network side to the base station of RS1 to the target wireless relay station; or
from a data node at the network side to the wireless relay station to which RS 1 accesses before a handover to the target wireless relay station.

8. A method of claim 3, wherein,
in step a), the stored information, according to which the base station or the wireless relay station working as the agent node select the target nodes, comprises one or more pieces of the following information: network topology relationship information of the group, wireless link status information of the group, network topology relationship information of adjacent wireless communication network groups, wireless link status information of adjacent wireless communication network groups, and information of adjacent cells measured by RS1.

9. A method of claim 1, 2 or 3, further comprising:
in step b), before the connection termination message is sent to RS1, if RS1 has data to transmit, the base station of RS1 before a handover or the wireless relay station acting as the agent node in the communication sub-network of RS 1 or the network side sending attributes of all or part of the wireless relay stations and terminals connecting to RS1 and having data to transmit to base stations of target nodes or wireless relay stations working as agent nodes in respective communication sub-networks of target nodes, to be used by these wireless relay stations and terminals during access, said part of the wireless relay stations and terminals being first hop wireless relay stations connecting to RS 1 and terminals directly connecting with RS 1.

10. A method of claim 3, further comprising:
the wireless relay stations or terminals synchronizing with possible adjacent base stations or adjacent wireless relay stations in advance and storing this synchronization information; in step a3), after receiving the instruction of updating the connections, said wireless relay stations and terminals connecting to RS 1 finding the synchronization information of the target nodes in the instruction from the stored synchronization information of adjacent base stations and adjacent wireless relay stations, to synchronize with the target nodes and establish wireless network connections.

11. A method of claim 1, 2 or 3, wherein,
the connection termination instruction sent in step b) comprises a time for terminating the connection, and both the base station and RS 1 release the resource when the time expires.

12. A method of claim 1, 2 or 3, wherein, said management node is the base station.

13. A method of claim 1, 2 or 3, further comprising:
when an abnormality occurs in a link between wireless relay stations, the connection relationship being terminated with one of
a wireless relay station which keeps a link with the base station sending a connection termination request to the base station, and the request indicating the wireless relay station at the other end, connection to which needs to be terminated, and a reason for requesting the termination; after receiving the request, the base station updating wireless network topology information of the group, and if the base station is not a management node, the base station reporting to the management node, and the management node updating the wireless network topology information of the group; or
a wireless relay station which keeps a link with the base station sending a connection termination request to the wireless relay station working as the agent node in the communication sub-network of the wireless relay station, and the request indicating the wireless relay station at the other end, connection to which needs to be terminated, and a reason for requesting the termination; after receiving the request, the wireless relay station working as the agent node updating wireless network topology information of the communication sub-network, and reporting to a management node, and after receiving the report, the management node updating wireless network topology information of the group; or
if a wireless relay station which keeps a link with the base station is an agent node, the wireless relay station updating wireless network topology information of the communication sub-network, and reporting to a management node; after receiving the report, the management node updating wireless network topology information of the group;
when an abnormality occurs in a link between a base station and a wireless relay station, the base station regarding the connection between the wireless relay station and the wireless communication network as terminated, and directly updating wireless network topology information of the group, while the wireless relay station notifying all the wireless relay stations and terminals connecting thereto that handovers to other base stations or wireless relay stations should be performed.

14. A method of claim 1, 2 or 3, further comprising:
a wireless relay station, connection to which is terminated for an abnormality in a link, according to a pre-determined strategy, restarting a process of joining a wireless connection network group, or shutting down transmit power and waiting for system maintenance.

15. A method of claim 1, 2 or 3, further comprising:
a management node in said wireless communication network group storing topology relationship information of the group, and after said management node sends the connection termination message in step b), the management node updating wireless network topology information of the group; or
a management node in said wireless communication network group storing topology relationship information of the group, and an agent node storing wireless network topology information of the communication sub-network, after the agent node sends the connection termination message in step b), the agent node updating the wireless network topology information of the communication sub-network and reporting to the management node, and after receiving the report, the management node updating wireless network topology information of the group.

## Patentansprüche

1. Ein Verfahren zum Terminieren einer Verbindung mit einer drahtlosen Relaisstation, angewendet in einem System, das eine Drahtloskommunikationsnetzgruppe beinhaltet, und wobei jede Drahtloskommunikationsnetzgruppe eine Basisstation und drahtlose Relaisstationen, welche der Basisstation untergeordnet sind, beinhaltet, **dadurch gekennzeichnet, dass** das Verfahren die folgenden Schritte beinhaltet:
a) eine drahtlose Relaisstation RS1, die bereits mit einer Drahtloskommunikationsnetzgruppe verbunden ist, und die Basisstation der Gruppe oder eine drahtlose Relaisstation, die in einem Kommunikationsteilnetz, zu dem RS1 gehört, als ein Agentenknoten arbeitet, bestimmen, dass die Verbindungsbeziehung mit RS1 terminiert werden muss (820, 920);
b) die Basisstation oder die als der Agentenknoten arbeitende drahtlose Relaisstation sendet eine Verbindungsterminierungsnachricht an RS1 und gibt die RS1-Ressource frei (850, 960);
c) nach dem Empfangen einer Verbindungsterminierungsanweisung gibt RS1 die Ressource zum Terminieren der Verbindung mit dem Drahtloskommunikationsnetz frei (860, 970);
wobei das Terminieren der Verbindungsbeziehung mit RS1 das Zurückziehen von RS1 aus der Kommunikationsnetzgruppe nach der Terminierung beinhaltet.

2. Verfahren gemäß Anspruch 1, das ferner Folgendes beinhaltet:
in Schritt a) bestimmt die Basisstation oder die als der Agentenknoten arbeitende drahtlose Relaisstation, dass die Verbindung mit RS1 gemäß der gegenwärtigen Situation und einer entsprechenden Strategie terminiert werden muss; oder RS1 bestimmt, dass die Verbindung mit dem Drahtloskommunikationsnetz gemäß der Situation von RS1 und einer entsprechenden Strategie terminiert werden muss, und sendet eine Verbindungsterminierungsanforderung an die Basisstation oder die als der Agentenknoten arbeitende drahtlose Relaisstation, und nach dem Empfangen der Anforderung bestimmt die Basisstation oder die als der Agentenknoten arbeitende drahtlose Relaisstation, dass die Verbindung mit RS1 terminiert werden kann, und dann folgt der nächste Schritt, andernfalls wird die Anforderung abgelehnt.

3. Verfahren gemäß Anspruch 1, das zwischen Schritt a) und Schritt b) ferner die folgenden Schritte beinhaltet:
a1) die Basisstation oder die als der Agentenknoten arbeitende drahtlose Relaisstation beurteilt, ob RS1 Daten zum Übertragen aufweist (820, 930), und falls ja, folgt der nächste Schritt, andernfalls folgt Schritt (b);
a2) die Basisstation oder die als der Agentenknoten arbeitende drahtlose Relaisstation wählt Zielknoten aus, an die die Übergaben erfolgen sollen, für alle oder einen Teil der drahtlosen Relaisstationen und Terminals, die mit RS1 verbunden sind und Daten zum Übertragen aufweisen, gemäß gespeicherten Informationen und einer vorgegebenen entsprechenden Strategie (830, 940);
a3) die Basisstation oder die als der Agentenknoten arbeitende drahtlose Relaisstation erstellt für die Terminals und drahtlosen Relaisstationen, die mit RS1 verbunden sind und Daten zum Übertragen aufweisen, Datentunnel zu diesen Zielknoten und sendet entsprechende Downlink-Daten in den Datentunneln und weist dann diese Terminals und drahtlosen Relaisstationen an, die Verbindungen mit den Zielknoten zu aktualisieren (840, 950).

4. Verfahren gemäß Anspruch 3, das ferner Folgendes beinhaltet:
nach dem Auswählen der Zielknoten in Schritt a2) sendet die Basisstation oder die als der Agentenknoten arbeitende drahtlose Relaisstation ferner Übergabeanforderungen an diese Zielknoten; und in Schritt a3), nach dem Erhalten der Antworten, dass die Zielknoten die Übergaben erlauben, werden die Datentunnel zu den Zielknoten erstellt.

5. Verfahren gemäß Anspruch 3, wobei
in Schritt a3), wenn die Datentunnel für die Terminals und die drahtlosen Relaisstationen, die mit RS1 verbunden sind und Daten zum Übertragen aufweisen, erstellt werden, werden Datentunnel lediglich für jene drahtlosen Erst-Hop-Relaisstationen und Terminals, die direkt mit RS1 verbunden sind, erstellt und andere drahtlose Relaisstationen und Terminals, die mit den drahtlosen Erst-Hop-Relaisstationen verbunden sind, werden mit den drahtlosen Erst-Hop-Relaisstationen transferiert.

6. Verfahren gemäß Anspruch 3, wobei
in Schritt a3), falls ein derartiger Zielknoten zu einer anderen Drahtloskommunikationsnetzgruppe gehört, der Datentunnel zu dem Zielknoten gemäß einem von Folgendem erstellt wird:
falls der Zielknoten eine andere Basisstation ist, von einem Datenknoten auf der Netzseite zu der RS1-Basisstation vor einer Übergabe zu der Zielbasisstation; falls der Zielknoten eine drahtlose Relaisstation ist, die mit einer anderen Basisstation verbunden ist, von einem Datenknoten auf der Netzseite zu der RS1-Basisstation vor einer Übergabe zu der Basisstation der drahtlosen Zielrelaisstation zu der drahtlosen Zielrelaisstation; oder
falls der Zielknoten eine andere Basisstation ist, von einem Datenknoten auf der Netzseite zu der Zielbasisstation; falls der Zielknoten eine drahtlose Relaisstation ist, die mit einer anderen Basisstation verbunden ist, von einem Datenknoten auf der Netzseite zu der Basisstation der drahtlosen Zielrelaisstation zu der drahtlosen Zielrelaisstation; oder
von einem Datenknoten auf der Netzseite zu der Basisstation, auf die RS1 vor der Übergabe zugreift, zu der drahtlosen Relaisstation, auf die RS1 vor der Übergabe zugreift, zu der drahtlosen Zielrelaisstation oder Zielbasisstation.

7. Verfahren gemäß Anspruch 3, wobei
in Schritt a3), falls ein derartiger Zielknoten zu derselben Drahtloskommunikationsnetzgruppe gehört, der Datentunnel zu dem Zielknoten gemäß einem von Folgendem erstellt wird:
von einem Datenknoten auf der Netzseite zu der RS1-Basisstation zu der drahtlosen Zielrelaisstation; oder
von einem Datenknoten auf der Netzseite zu der drahtlosen Relaisstation, auf die RS1 vor der Übergabe zugreift, zu der drahtlosen Zielrelaisstation.

8. Verfahren gemäß Anspruch 3, wobei
in Schritt a) die gespeicherten Informationen, gemäß welchen die Basisstation oder die als der Agentenknoten arbeitende drahtlose Relaisstation die Zielknoten auswählt, eine oder mehrere Einzelheiten der folgenden Informationen beinhalten:
Netztopologiebeziehungsinformationen der Gruppe,
Drahtlosverknüpfungsstatusinformationen der Gruppe,
Netztopologiebeziehungsinformationen benachbarter
Drahtloskommunikationsnetzgruppen, Drahtlosverknüpfungsstatusinformationen benachbarter Drahtloskommunikationsnetzgruppen und Informationen benachbarter Zellen, gemessen durch RS1.

9. Verfahren gemäß Anspruch 1, 2 oder 3, das ferner Folgendes beinhaltet:
in Schritt b), vor dem Senden der Verbindungsterminierungsnachricht an RS1, falls RS1 Daten zum Übertragen aufweist, sendet die RS1-Basisstation vor einer Übergabe oder die in dem RS1-Kommunikationsteilnetz als der Agentenknoten arbeitende drahtlose Relaisstation oder die Netzseite Attribute von allen oder einem Teil der drahtlosen Relaisstationen und Terminals, die mit RS1 verbunden sind und Daten zum Übertragen aufweisen, an die Basisstationen von Zielknoten oder drahtlosen Relaisstationen, die in den entsprechenden Kommunikationsteilnetzen von Zielknoten als Agentenknoten arbeiten, zum Verwenden durch diese drahtlosen Relaisstationen und Terminals während des Zugriffs, wobei der Teil der drahtlosen Relaisstationen und Terminals drahtlose Erst-Hop-Relaisstationen, die mi RS1 verbunden sind, und Terminals, die direkt mit RS1 verbunden sind, sind.

10. Verfahren gemäß Anspruch 3, das ferner Folgendes beinhaltet:
die drahtlosen Relaisstationen oder Terminals synchronisieren mit möglichen benachbarten Basisstationen oder benachbarten drahtlosen Relaisstationen im Voraus und speichern diese Synchronisationsinformationen; in Schritt a3), nach dem Empfangen der Anweisung zum Aktualisieren der Verbindungen finden die mit RS1 verbundenen drahtlosen Relaisstationen und Terminals die Synchronisationsinformationen der Zielknoten in der Anweisung aus den gespeicherten Synchronisationsinformationen benachbarter Basisstationen und benachbarter drahtloser Relaisstationen zum Synchronisieren mit den Zielknoten und Erstellen drahtloser Netzverbindungen.

11. Verfahren gemäß Anspruch 1, 2 oder 3, wobei
die in Schritt b) gesendete Verbindungsterminierungsanweisung einen Zeitpunkt zum Terminieren der Verbindung beinhaltet und sowohl die Basisstation als auch RS1 die Ressource nach dem Zeitpunkt freigeben.

12. Verfahren gemäß Anspruch 1, 2 oder 3, wobei der Verwaltungsknoten die Basisstation ist.

13. Verfahren gemäß Anspruch 1, 2 oder 3, das ferner Folgendes beinhaltet:
wenn in einer Verknüpfung zwischen drahtlosen Relaisstationen eine Unregelmäßigkeit auftritt, die Verbindungsbeziehung durch eines von Folgendem terminiert wird:
eine drahtlose Relaisstation, die eine Verknüpfung mit der Basisstation hält, sendet eine Verbindungsterminierungsanforderung an die Basisstation, und die Anforderung gibt die drahtlose Relaisstation an dem anderen Ende, mit der die Verbindung terminiert werden muss, und einen Grund für das Anfordern der Terminierung an; nach dem Empfangen der Anforderung aktualisiert die Basisstation die Drahtlosnetztopologieinformationen der Gruppe und falls die Basisstation kein Verwaltungsknoten ist, benachrichtigt die Basisstation den Verwaltungsknoten und der Verwaltungsknoten aktualisiert die Drahtlosnetztopologieinformationen der Gruppe; oder
eine drahtlose Relaisstation, die eine Verknüpfung mit der Basisstation hält, sendet eine Verbindungsterminierungsanforderung an die drahtlose Relaisstation, die in dem Kommunikationsteilnetz der drahtlosen Relaisstation als der Agentenknoten arbeitet, und die Anforderung gibt die drahtlose Relaisstation an dem anderen Ende, mit der die Verbindung terminiert werden muss, und einen Grund für das Anfordern der Terminierung an; nach dem Empfangen der Anforderung aktualisiert die als der Agentenknoten arbeitende drahtlose Relaisstation die
Drahtlosnetztopologieinformationen des Kommunikationsteilnetzes und benachrichtigt einen Verwaltungsknoten und nach dem Empfang der Benachrichtigung aktualisiert der Verwaltungsknoten die Drahtlosnetztopologieinformationen der Gruppe; oder falls eine drahtlose Relaisstation, die eine Verknüpfung mit der Basisstation hält, ein Agentenknoten ist, aktualisiert die drahtlose Relaisstation die Drahtlosnetztopologieinformationen des Kommunikationsteilnetzes und benachrichtigt einen Verwaltungsknoten; nach dem Empfangen der Benachrichtigung aktualisiert der Verwaltungsknoten die Drahtlosnetztopologieinformationen der Gruppe;
wenn bei einer Verknüpfung zwischen einer Basisstation und einer drahtlosen Relaisstation eine Unregelmäßigkeit auftritt, betrachtet die Basisstation die Verbindung zwischen der drahtlosen Relaisstation und dem Drahtloskommunikationsnetz als terminiert und aktualisiert direkt die Drahtlosnetztopologieinformationen der Gruppe, während die drahtlose Relaisstation allen drahtlosen Relaisstationen und Terminals, die damit verbunden sind, meldet, dass Übergaben an andere Basisstationen oder drahtlose Relaisstationen durchgeführt werden sollten.

14. Verfahren gemäß Anspruch 1, 2 oder 3, das ferner Folgendes beinhaltet:
eine drahtlose Relaisstation, mit der die Verbindung aufgrund einer Unregelmäßigkeit bei einer Verknüpfung terminiert ist, gemäß einer vorbestimmten Strategie, startet wieder einen Prozess des Beitretens einer Drahtlosverbindungsnetzgruppe oder beendet die Übertragungsleistung und wartet auf Systemwartung.

15. Verfahren gemäß Anspruch 1, 2 oder 3, das ferner Folgendes beinhaltet:
ein Verwaltungsknoten in der Drahtloskommunikationsnetzgruppe speichert Topologiebeziehungsinformationen der Gruppe und nachdem der Verwaltungsknoten die Verbindungsterminierungsnachricht in Schritt b) sendet, aktualisiert der Verwaltungsknoten die Drahtlosnetztopologieinformationen der Gruppe; oder
ein Verwaltungsknoten in der Drahtloskommunikationsnetzgruppe speichert Topologiebeziehungsinformationen der Gruppe und ein Agentenknoten speichert Drahtlosnetztopologieinformationen des Kommunikationsteilnetzes, nachdem der Verwaltungsknoten die Verbindungsterminierungsnachricht in Schritt b) sendet, aktualisiert der Agentenknoten die Drahtlosnetztopologieinformationen des Kommunikationsteilnetzes und benachrichtigt den Verwaltungsknoten und nach dem Empfangen der Benachrichtigung aktualisiert der Verwaltungsknoten die Drahtlosnetztopologieinformationen der Gruppe.

## Revendications

1. Une méthode pour clôturer une connexion à une station relais sans fil, appliquée dans un système comprenant un groupe de réseau de communication sans fil, et chaque groupe de réseau de communication sans fil comprenant une station de base et des stations relais sans fil subordonnées à la station de base, **caractérisée en ce que** la méthode comprend les étapes suivantes de :
a) une station relais sans fil RS1, se connectant déjà à un groupe de réseau de communication sans fil, et la station de base du groupe ou une station relais sans fil faisant office de noeud agent dans un sous-réseau de communication auquel appartient RS1, déterminant que le lien de connexion à RS1 doit être clôturé (820, 920) ;
b) ladite station de base ou la station relais sans fil faisant office de noeud agent envoyant un message de clôture de connexion à RS1 et libérant la ressource de RS1 (850, 960) ;
c) après réception d'une instruction de clôture de connexion, RS1 libérant la ressource afin de clôturer la connexion au réseau de communication sans fil (860, 970) ;
dans laquelle le fait de clôturer le lien de connexion à RS1 comprend le fait que RS1 se retire du groupe de réseau de communication après la clôture.

2. Une méthode de la revendication 1, comprenant en sus :
à l'étape a), ladite station de base ou la station relais sans fil faisant office de noeud agent déterminant que la connexion à RS1 doit être clôturée suivant une situation actuelle et une stratégie correspondante ; ou
RS1 déterminant que la connexion au réseau de communication sans fil doit être clôturée suivant la situation de RS1 et une stratégie correspondante, et envoyant une requête de clôture de connexion à la station de base ou à la station relais sans fil faisant office de noeud agent, et après réception de la requête, la station de base ou la station relais sans fil faisant office de noeud agent déterminant que la connexion à RS1 peut être clôturée, et passant alors à l'étape suivante, sinon rejetant la requête.

3. Une méthode de la revendication 1, comprenant en sus les étapes suivantes entre l'étape a) et l'étape b) :
a1) la station de base ou la station relais sans fil faisant office de noeud agent jugeant si RS1 a des données à transmettre (820, 930), et si oui, passant à l'étape suivante, sinon passant à l'étape (b) ;
a2) la station de base ou la station relais sans fil faisant office de noeud agent sélectionnant des noeuds cibles vers lesquels il faut effectuer des commutations pour tout ou partie des stations relais sans fil et terminaux se connectant à RS1 et ayant des données à transmettre, suivant des informations stockées et une stratégie correspondante prédéfinie (830, 940) ;
a3) la station de base ou la station relais sans fil faisant office de noeud agent établissant des tunnels de données vers ces noeuds cibles pour les terminaux et stations relais sans fil se connectant à RS1 et ayant des données à transmettre, et envoyant des données en liaison descendante correspondantes dans les tunnels de données, puis donnant l'instruction à ces terminaux et stations relais sans fil de mettre à jour les connexions vers les noeuds cibles (840, 950).

4. Une méthode de la revendication 3, comprenant en sus :
après sélection des noeuds cibles à l'étape a2), la station de base ou la station relais sans fil faisant office de noeud agent envoyant en sus des requêtes de commutation à ces noeuds cibles ; et à l'étape a3), après obtention de réponses comme quoi les noeuds cibles autorisent les commutations, établissant lesdits tunnels de données vers les noeuds cibles.

5. Une méthode de la revendication 3, dans laquelle
à l'étape a3), lorsque les tunnels de données sont établis pour les terminaux et stations relais sans fil se connectant à RS1 et ayant des données à transmettre, il n'est établi de tunnels de données que pour ces stations relais sans fil de premier bond et terminaux en connexion directe avec RS1, et les autres stations relais sans fil et terminaux se connectant aux stations relais sans fil de premier bond transfèrent avec les stations relais sans fil de premier bond.

6. Une méthode de la revendication 3, dans laquelle
à l'étape a3), si un dit noeud cible appartient à un autre groupe de réseau de communication sans fil, ledit tunnel de données vers le noeud cible est établi suivant l'un des cas de figure ci-dessous :
si le noeud cible est une autre station de base, d'un noeud de données côté réseau à la station de base de RS1 avant une commutation à la station de base cible ; si le noeud cible est une station relais sans fil se connectant à une autre station de base, d'un noeud de données côté réseau à la station de base de RS1 avant une commutation à la station de base de la station relais sans fil cible à la station relais sans fil cible ; ou
si le noeud cible est une autre station de base, d'un noeud de données côté réseau à la station de base cible ; si le noeud cible est une station relais sans fil se connectant à une autre station de base, d'un noeud de données côté réseau à la station de base de la station relais sans fil cible à la station relais sans fil cible ; ou
d'un noeud de données côté réseau à la station de base à laquelle a accès RS1 avant la commutation à la station relais sans fil à laquelle a accès RS1 avant la commutation à la station relais sans fil cible ou station de base cible.

7. Une méthode de la revendication 3, dans laquelle à l'étape a3), si un dit noeud cible appartient au même groupe de réseau de communication sans fil, ledit tunnel de données vers le noeud cible est établi suivant l'un des cas de figure ci-dessous :
d'un noeud de données côté réseau à la station de base de RS1 à la station relais sans fil cible ; ou
d'un noeud de données côté réseau à la station relais sans fil à laquelle a accès RS1 avant une commutation à la station relais sans fil cible.

8. Une méthode de la revendication 3, dans laquelle
à l'étape a), les informations stockées, suivant lesquelles la station de base ou la station relais sans fil faisant office de noeud agent sélectionnent les noeuds cibles, comprennent un ou plusieurs éléments d'information parmi les suivantes : des informations relatives aux liens de topologie de réseau du groupe, des informations relatives au statut des liaisons sans fil du groupe, des informations relatives aux liens de topologie de réseau de groupes de réseau de communication sans fil adjacents, des informations relatives au statut des liaisons sans fil de groupes de réseau de communication sans fil adjacents, et des informations de cellules adjacentes mesurées par RS1.

9. Une méthode de la revendication 1, la revendication 2 ou la revendication 3, comprenant en sus :
à l'étape b), avant que le message de clôture de connexion ne soit envoyé à RS1, si RS1 a des données à transmettre, la station de base de RS1 avant une commutation ou la station relais sans fil agissant en tant que noeud agent dans le sous-réseau de communication de RS1 ou le côté réseau envoyant des attributs de tout ou partie des stations relais sans fil et terminaux se connectant à RS1 et ayant des données à transmettre à des stations de base de noeuds cibles ou des stations relais sans fil faisant office de noeuds agents dans des sous-réseaux de communication respectifs de noeuds cibles, pour être utilisés par ces stations relais sans fil et terminaux pendant l'accès, ladite partie des stations relais sans fil et terminaux étant des stations relais sans fil de premier bond se connectant à RS1 et des terminaux en connexion directe avec RS1.

10. Une méthode de la revendication 3, comprenant en sus :
les stations relais sans fil ou terminaux se synchronisant avec des stations de base adjacentes ou stations relais sans fil adjacentes possibles à l'avance et stockant ces informations de synchronisation ; à l'étape a3), après réception de l'instruction de mettre à jour les connexions, lesdites stations relais sans fil et lesdits terminaux se connectant à RS1 trouvant les informations de synchronisation des noeuds cibles dans l'instruction parmi les informations de synchronisation stockées de stations de base adjacentes et stations relais sans fil adjacentes, afin de se synchroniser avec les noeuds cibles et d'établir des connexions de réseau sans fil.

11. Une méthode de la revendication 1, la revendication 2 ou la revendication 3, dans laquelle
l'instruction de clôture de connexion envoyée à l'étape b) comprend un délai imparti pour clôturer la connexion, et la station de base et RS1 libèrent toutes deux la ressource à l'expiration de ce délai.

12. Une méthode de la revendication 1, la revendication 2 ou la revendication 3, dans laquelle ledit noeud de gestion est la station de base.

13. Une méthode de la revendication 1, la revendication 2 ou la revendication 3, comprenant en sus :
lorsqu'il se produit une anomalie dans une liaison entre des stations relais sans fil, le lien de connexion étant clôturé par l'un des cas de figure ci-dessous :
une station relais sans fil qui garde une liaison avec la station de base envoyant une requête de clôture de connexion à la station de base, et la requête indiquant la station relais sans fil à l'autre extrémité, avec laquelle la connexion doit être clôturée, et une raison pour requérir la clôture ; après réception de la requête, la station de base mettant à jour les informations relatives à la topologie de réseau sans fil du groupe, et si la station de base n'est pas un noeud de gestion, la station de base le rapportant au noeud de gestion, et le noeud de gestion mettant à jour les informations relatives à la topologie de réseau sans fil du groupe ; ou
une station relais sans fil qui garde une liaison avec la station de base envoyant une requête de clôture de connexion à la station relais sans fil faisant office de noeud agent dans le sous-réseau de communication de la station relais sans fil, et la requête indiquant la station relais sans fil à l'autre extrémité, avec laquelle la connexion doit être clôturée, et une raison pour requérir la clôture ; après réception de la requête, la station relais sans fil faisant office de noeud agent mettant à jour des informations relatives à la topologie de réseau sans fil du sous-réseau de communication, et le rapportant à un noeud de gestion, et après réception du rapport, le noeud de gestion mettant à jour les informations relatives à la topologie de réseau sans fil du groupe ; ou
si une station relais sans fil qui garde une liaison avec la station de base est un noeud agent, la station relais sans fil mettant à jour des informations relatives à la topologie de réseau sans fil du sous-réseau de communication, et le rapportant à un noeud de gestion ; après réception du rapport, le noeud de gestion mettant à jour des informations relatives à la topologie de réseau sans fil du groupe ;
lorsqu'il se produit une anomalie dans une liaison entre une station de base et une station relais sans fil, la station de base considérant la connexion entre la station relais sans fil et le réseau de communication sans fil comme clôturée, et mettant directement à jour des informations relatives à la topologie de réseau sans fil du groupe, la station relais sans fil notifiant pendant ce temps à l'ensemble des stations relais sans fil et terminaux se connectant à celle-ci qu'il faut effectuer des commutations vers d'autres stations de base ou stations relais sans fil.

14. Une méthode de la revendication 1, la revendication 2 ou la revendication 3, comprenant en sus :
une station relais sans fil, avec laquelle la connexion est clôturée du fait d'une anomalie dans une liaison, suivant une stratégie prédéterminée, relançant un processus pour se joindre à un groupe de réseau de connexion sans fil, ou coupant la puissance de transmission et attendant une maintenance du système.

15. Une méthode de la revendication 1, la revendication 2 ou la revendication 3, comprenant en sus :
un noeud de gestion dans ledit groupe de réseau de communication sans fil stockant des informations relatives aux liens de topologie du groupe, et après que ledit noeud de gestion a envoyé le message de clôture de connexion à l'étape b), le noeud de gestion mettant à jour des informations relatives à la topologie de réseau sans fil du groupe ; ou
un noeud de gestion dans ledit groupe de réseau de communication sans fil stockant des informations relatives aux liens de topologie du groupe, et un noeud agent stockant des informations relatives à la topologie de réseau sans fil du sous-réseau de communication, après que le noeud agent a envoyé le message de clôture de connexion à l'étape b), le noeud agent mettant à jour les informations relatives à la topologie de réseau sans fil du sous-réseau de communication et le rapportant au noeud de gestion, et après réception du rapport, le noeud de gestion mettant à jour des informations relatives à la topologie de réseau sans fil du groupe.
